(19) Europäisches Patentamt
European Patent Office
Office européen des brevets

(11) **EP 4 332 909 A1**

(12) **EUROPEAN PATENT APPLICATION**

(43) Date of publication:
**06.03.2024 Bulletin 2024/10**

(21) Application number: **23175368.2**

(22) Date of filing: **25.05.2023**

(51) International Patent Classification (IPC):
**G06V 10/62** (2022.01)     **G06V 10/82** (2022.01)
**G06V 20/40** (2022.01)     **G06V 20/52** (2022.01)
**G06V 40/20** (2022.01)

(52) Cooperative Patent Classification (CPC):
**G06V 20/52; G06V 10/62; G06V 10/82;
G06V 20/41; G06V 20/49; G06V 40/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.08.2022   JP 2022136363**

(71) Applicant: **FUJITSU LIMITED
Kawasaki-shi, Kanagawa 211-8588 (JP)**

(72) Inventors:
• **Fujimoto, Junya
  Kawasaki-shi, Kanagawa, 211-8588 (JP)**
• **Suzuki, Genta
  Kawasaki-shi, Kanagawa, 211-8588 (JP)**
• **Masuhara, Hiroki
  Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **ABNORMALITY TRANSMISSION PROGRAM, ABNORMALITY TRANSMISSION METHOD, AND INFORMATION PROCESSING APPARATUS**

(57)     A behavior recognition device (1) acquires (10) a video image in which a person is captured, and determines (10), by analyzing the acquired video image, whether or not an elemental behavior performed by the person is abnormal for each section that is obtained by dividing the video image. When the behavior recognition device (1) determined that the elemental behavior is abnormal, the behavior recognition device (1) extracts (50), from the acquired video image, the video image included in the section in which the elemental behavior is determined to be abnormal. The behavior recognition device (1) transmits (50), in an associated manner, the extracted video image included in the section and a category of the elemental behavior that is determined to be abnormal.

FIG.1

EP 4 332 909 A1

**Description**

FIELD

The embodiments discussed herein are related to an abnormality transmission program, an abnormality transmission method, and an information processing apparatus.

BACKGROUND

In recent years, in various industries, such as manufacturing industries, transportation industries, or service industries, introduction of machine learning models designed for various use purposes, such as a reduction in manpower cost, a reduction in human-induced error, or improvement of work efficiency is being facilitated.

Patent Document 1: Japanese Laid-open Patent Publication No. 2022-82277

By the way, as one example of the machine learning model described above, there is a known machine learning model that identifies work performed by a person from a video image. A developer of this type of machine learning model usually consistently provides the introduction and an operation of the machine learning model, and provides a monitoring tool (Web application, etc.) to the destination to be introduced.

However, in the process of providing the consistent service as described above, development and an update of the machine learning model and development and an update of the Web application are performed in parallel, so that the machine learning model is infrequently updated and it is thus difficult to improve identification accuracy of work performed by a person.

Accordingly, it is an object in one aspect of an embodiment of the present invention to provide an abnormality transmission program, an abnormality transmission method, and an information processing apparatus capable of improving identification accuracy of work performed by a person.

SUMMARY

According to an aspect of an embodiment, an abnormality transmission program that causes a computer (1) to execute a process. The process includes acquiring (10) a video image in which a person is captured, determining (10), by analyzing the acquired video image, whether or not an elemental behavior performed by the person is abnormal for each section that is obtained by dividing the video image, when it is determined that the elemental behavior is abnormal, extracting (50), from the acquired video image, the video image included in the section in which the elemental behavior is determined to be abnormal, and transmitting (50), in an associated manner, the extracted video image included in the section and a category of the elemental behavior that is determined to be abnormal.

BRIEF DESCRIPTION OF DRAWINGS

FIG. 1 is a diagram illustrating an example of the overall configuration of a system according to a first embodiment;
FIG. 2 is a diagram illustrating a behavior recognition device according to the first embodiment;
FIG. 3 is a functional block diagram illustrating a functional configuration of each of devices according to the first embodiment;
FIG. 4 is a diagram illustrating a comparative example according to the present embodiment;
FIG. 5 is a diagram illustrating another comparative example according to the present embodiment;
FIG. 6 is a diagram illustrating a problem point of the comparative example;
FIG. 7 is a diagram illustrating a problem point of the comparative example;
FIG. 8 is a diagram illustrating a problem point of the comparative example;
FIG. 9 is a diagram illustrating a problem point of the comparative example;
FIG. 10 is a diagram illustrating an outline of the present embodiment;
FIG. 11 is a functional block diagram of a behavior section detection unit;
FIG. 12 is a conceptual diagram of a hidden semi-Markov model that is one example of a first model;
FIG. 13 is a conceptual diagram illustrating a state of a first hidden Markov model;
FIG. 14 is a diagram illustrating setting of an evaluation section;
FIG. 15 is a diagram illustrating calculation of an evaluation value;
FIG. 16 is a diagram illustrating the effect in the present embodiment;
FIG. 17 is a diagram illustrating a standard rule;
FIG. 18 is a diagram illustrating a specific example 1 of abnormality transmission;

FIG. 19 is a diagram illustrating a specific example 2 of abnormality transmission;

FIG. 20 is a diagram illustrating a specific example 3 of abnormality transmission;

FIG. 21 is a diagram illustrating a display example of a Web screen;

FIG. 22 is a diagram illustrating a display example of the Web screen at the time of abnormality detection;

FIG. 23 is a flowchart illustrating one example of a machine learning process;

FIG. 24 is a flowchart illustrating one example of a detection process;

FIG. 25 is a diagram illustrating one example in which an elemental behavior section and an evaluation section are divided;

FIG. 26 is a flowchart illustrating the flow of an abnormality detection process;

FIG. 27 is a diagram illustrating an example of a hardware configuration of the behavior recognition device; and

FIG. 28 is a diagram illustrating an example of a hardware configuration of a cloud server.

## DESCRIPTION OF EMBODIMENTS

Preferred embodiments will be explained with reference to accompanying drawings. Furthermore, the present invention is not limited to the embodiments. In addition, each of the embodiments can be used in any appropriate combination as long as they do not conflict with each other.

(a) First Embodiment

Overall configuration

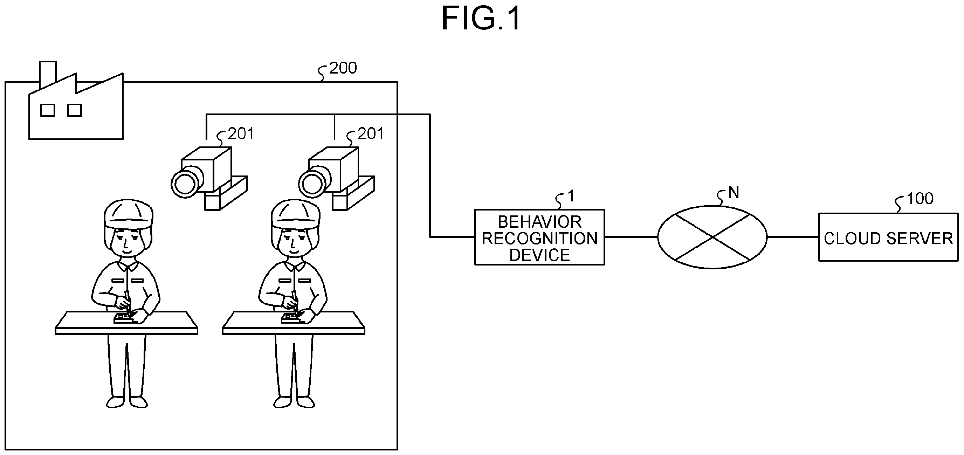

FIG. 1 is a diagram illustrating the overall configuration of a system according to a first embodiment. As illustrated in FIG. 1, the system is an edge cloud system that includes a factory 200, a behavior recognition device 1, and a cloud server 100. The behavior recognition device 1 corresponding to an edge device and the cloud server 100 in the cloud system are connected via a network N so as to be communicated with each other. In addition, an example of the network N used here includes a Long Term Evolution (LTE) line, the Internet, or the like irrespective of a wired or wireless manner.

The factory 200 is a factory that produces various products, and in which cameras 201 are installed at respective workplaces in which workers performs their work. In addition, the type of the factory and the produced products are not limited and may be applied to various fields including, for example, a factory producing processed goods, a factory managing distribution of products, an automobile factory, and the like.

The behavior recognition device 1 is connected to each of the plurality of cameras 201 that are installed in the factory 200, and acquires a video image (video image data) captured by each of the cameras 201. The behavior recognition device 1 transmits, to the cloud server 100, in an associated manner, identification information for identifying the cameras 201, a work location in which each of the cameras 201 is installed, the video image captured by the associated camera 201, and the like.

The cloud server 100 is one example of a server device that provides, to a user, a state of the factory 200 and a Web application that monitors work performed by each of the workers or the like. The cloud server 100 collects the video images captured by each of the cameras 201 from the behavior recognition device 1, and provides the Web application for allowing a work state of each of the workers to be browsed.

With this configuration, the behavior recognition device 1 acquires the video images in each of which an employee who performs individual work in the factory 200 has been captured, and determines, by inputting the acquired video images to a machine learning model, whether or not an elemental behavior performed by the employee is abnormal for each section that is obtained by dividing the video image. Then, if it is determined that the elemental behavior is abnormal, the behavior recognition device 1 extracts, from the acquired video image, the video image that is included in the section in which the elemental behavior is determined to be abnormal. After that, the behavior recognition device 1 associates the video image included in the extracted section with the category of the elemental behavior that has been determined to be abnormal and transmits the associated data to the cloud server 100.

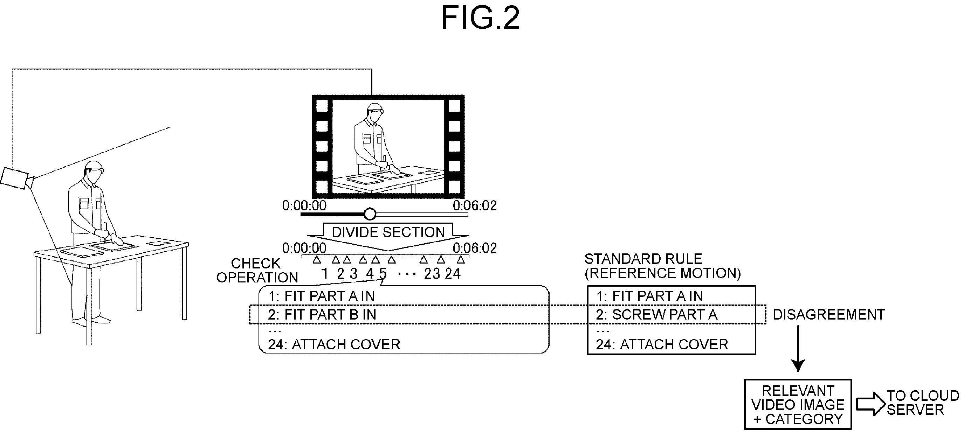

FIG. 2 is a diagram illustrating the behavior recognition device 1 according to the first embodiment. As illustrated in FIG. 2, the behavior recognition device 1 stores therein a standard rule in which items of tasks to "1. fit a part A in, 2. screw the part A, ..." and the like are defined as correct elemental behaviors to be performed in each of the sections or as elemental behaviors that are normally performed.

Then, the behavior recognition device 1 analyzes the video images captured by the cameras 201 and identifies that behaviors of "1. fitting the part A in, 2. fitting a part B in, ..." have been performed.

After that, the item of the task to "2. screw the part A" indicated in the standard rule does not agree with the item of the task to "2. fit the part B in" indicated by a recognition result, so that the behavior recognition device 1 associates the video image corresponding to the item of the task to "2. fit the part B in" indicated by the recognition result with a category of "(2. fit the part B in) indicated by the recognition result" and transmits the associated data to the cloud server 100.

As described above, the behavior recognition device 1 performs detection of an abnormal behavior by performing behavior recognition on the workers in the factory and notifies the cloud server 100 of the obtained result, whereas the cloud server 100 provides, to the user, the video images in each of which the work state of the worker and the work content are able to be identified.

Functional configuration

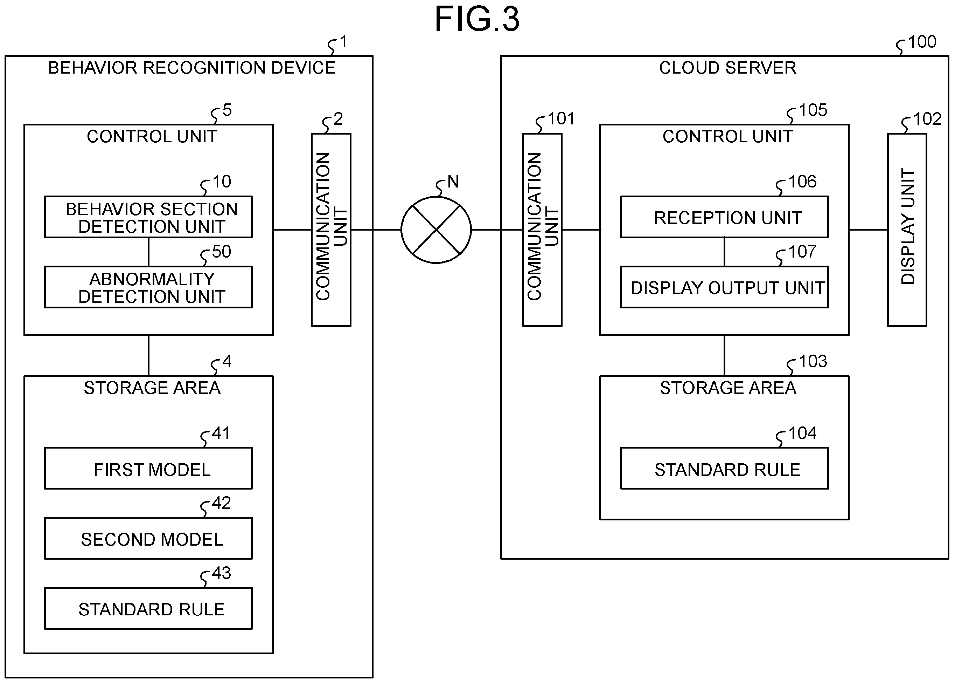

FIG. 3 is a functional block diagram illustrating a functional configuration of each of the devices according to the first embodiment. Here, the functional configuration of each of the behavior recognition device 1 and the cloud server 100 will be described.

Functional configuration of behavior recognition device 1

As illustrated in FIG. 3, the behavior recognition device 1 includes a communication unit 2, a storage area 4, and a control unit 5. The communication unit 2 is a processing unit that performs control of communication with another device and is implemented by, for example, a communication interface, or the like. For example, the communication unit 2 sends and receives various kinds of information to and from the cloud server 100, and receives a video image from each of the cameras 201.

The storage area 4 is a processing unit that stores therein various kinds of data and a program executed by the control unit 5 and is implemented by, for example, a memory, a hard disk, or the like. The storage area 4 stores therein a first model 41, a second model 42, and a standard rule 43.

The control unit 5 is a processing unit that manages the entirety of the behavior recognition device 1 and is implemented by, for example, a processor or the like. The control unit 5 includes a behavior section detection unit 10 and an abnormality detection unit 50. In addition, the behavior section detection unit 10 and the abnormality detection unit 50 are implemented by, for example, an electronic circuit included in the processor, a process executed by the processor, or the like.

Description of behavior section detection unit 10

First, the behavior section detection unit 10 will be described. The behavior section detection unit 10 detects, from the video image, on the basis of feature values that are obtained in time series and that are related to motions made by a person extracted from the video image of the person, a time section in which a behavior corresponding to a detection target has occurred (hereinafter, referred to as a "behavior section"). In the present embodiment, for example, a behavior of a person manufacturing a product is used as a behavior that corresponds to a detection target, and a combination of motions of the person performed at the time at which the person performs each of the processes of manufacturing a product is used as an elemental behavior. In other words, a behavior including a plurality of elemental behaviors whose sequential order of occurrences of the behaviors is constrained, such as work performed in the factory including a plurality of processes to be performed in a predetermined sequential order, is used as a behavior that corresponds to the detection target.

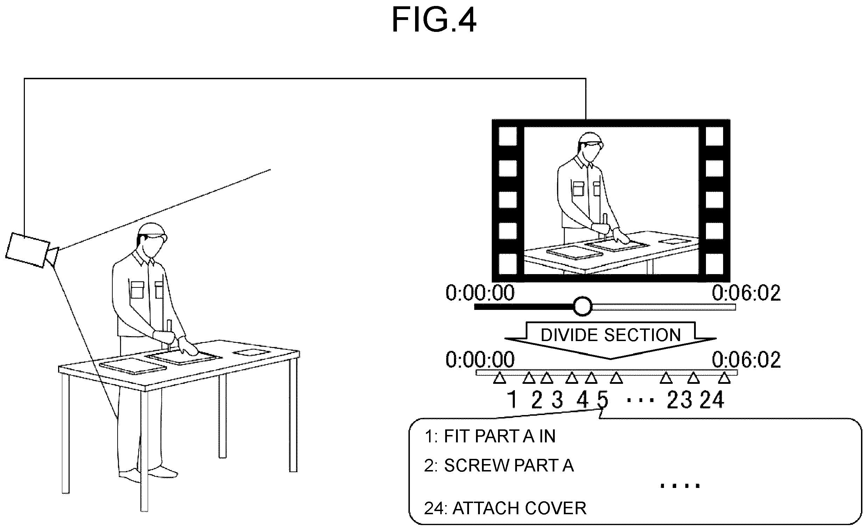

Here, as a comparative example of the present embodiment, it is conceivable to use a method of identifying a behavior section from a video image by manually dividing the video image into sections. The method used in the comparative example is a method for, for example, as illustrated in FIG. 4 on the left side, acquiring a video image obtained by capturing appearances of a series of work by a camera, and manually dividing, by visually checking the acquired video image as illustrated in FIG. 4 on the right side, the video image into time sections associated with the respective elemental behaviors (hereinafter, referred to as an "elemental behavior section"). In the example illustrated in FIG. 4, each of the items of tasks to "fit the part A in", "screw the part A", and "attach a cover" is one example of the elemental behavior. In this way, time and efforts are needed in the case where the video image is manually divided into the elemental behavior sections according to each of the acquired video image.

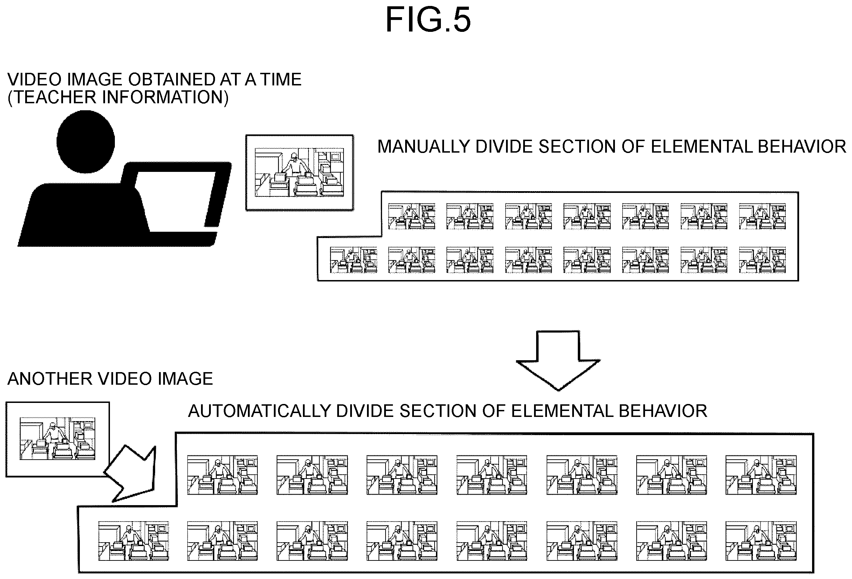

In addition, as another comparative example of the present embodiment, as illustrated an upper part of FIG. 5, it is conceivable to manually divide a video image obtained at a time into elemental behavior sections, and, as illustrated in the lower part of FIG. 5, it is conceivable to automatically divide another video image into elemental behavior sections by using the obtained division result as teacher information. In this case, it is possible to reduce time and efforts for all of the video images as compared to a case in which the video image is manually divided into the elemental behavior sections.

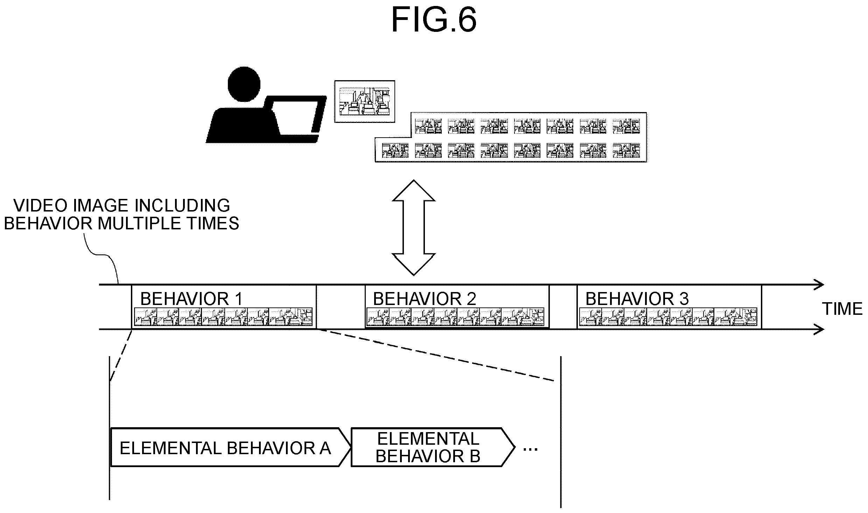

In addition, in some cases, in the video image that is actually acquired, as illustrated in FIG. 6, a behavior corresponding to a detection target may be included multiple times, or a behavior other than the behavior corresponding to the detection target may be included. It is also conceivable to apply, to this type of video image, as illustrated on the upper part of FIG. 5, the teacher information on the behavior sections obtained by manually dividing the elemental behavior section, estimate a desired behavior section from the video image, and then divide the behavior section into each of the elemental behavior sections. However, it is unclear that what kind of motion is included in the video image, that is, motions of a person exhibited between behaviors, behaviors other than the behavior corresponding to the detection target are not modeled on the basis of the teacher information, so that it is difficult to appropriately estimate the behavior section that corresponds to the detection target.

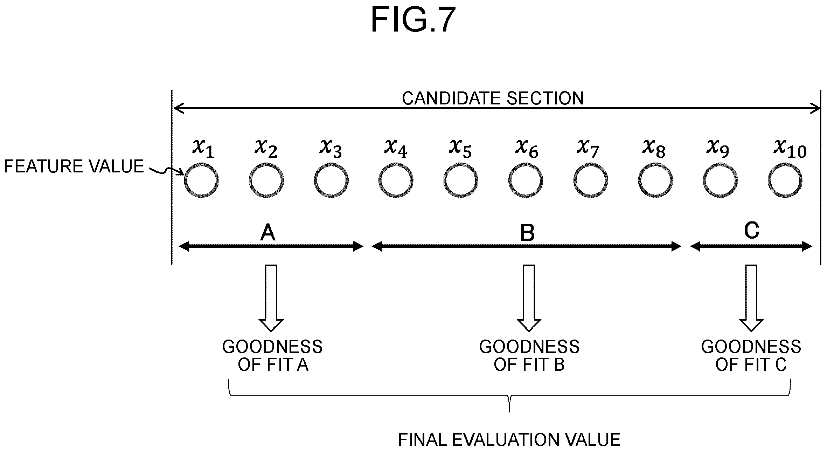

Accordingly, as another comparative example of the present embodiment, it is conceivable to apply the teacher information for each candidate section that has been set with respect to the video image, and determine, by evaluating a section associated with the elemental behavior section indicated by the teacher information is included in the candidate section, whether or not the candidate section is included in the behavior section. For example, as illustrated in FIG. 7, the elemental behavior section is estimated by dividing time series feature values $(x_1, x_2, ..., x_{10})$ included in a candidate section on the basis of the teacher information. FIG. 7 illustrates an example in which the sections of feature values $x_1$ to $x_3$ are estimated as an elemental behavior section associated with an elemental behavior A, the sections of feature values $x_4$ to $x_8$ are estimated as an elemental behavior section associated with an elemental behavior B, and the sections of feature values $x_9$ to $x_{10}$ are estimated as an elemental behavior section associated with an elemental behavior C. Then, it is conceivable to calculate a goodness of fit (goodness of fit of A, B, and C) between the feature value and the teacher information in each of the elemental behavior sections, and detect, if a final evaluation value that is obtained by integrating these evaluation values exceeds a predetermined threshold, the candidate section as a behavior section that corresponds to the detection target.

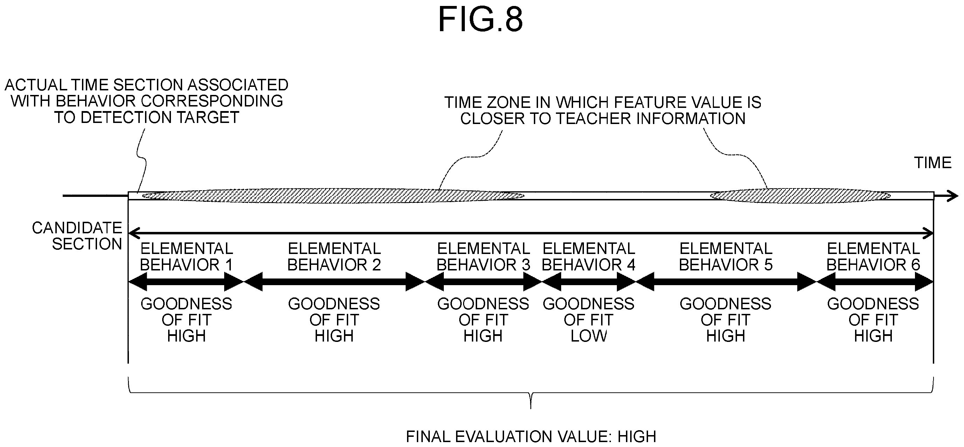

If goodness of fit between the feature value in the elemental behavior section and the teacher information is high, this indicates that a process of dividing the elemental behavior section is correctly performed in the candidate section. As illustrated in FIG. 8, in the case where a time zone in which the feature value is closer to the teacher information occupies a large portion in the actual time section associated with the behavior corresponding to the detection target and, in a candidate section similar to the actual time section, the number of elemental behavior sections in which the goodness of fit is high is increased, and thus, the final evaluation value is also increased.

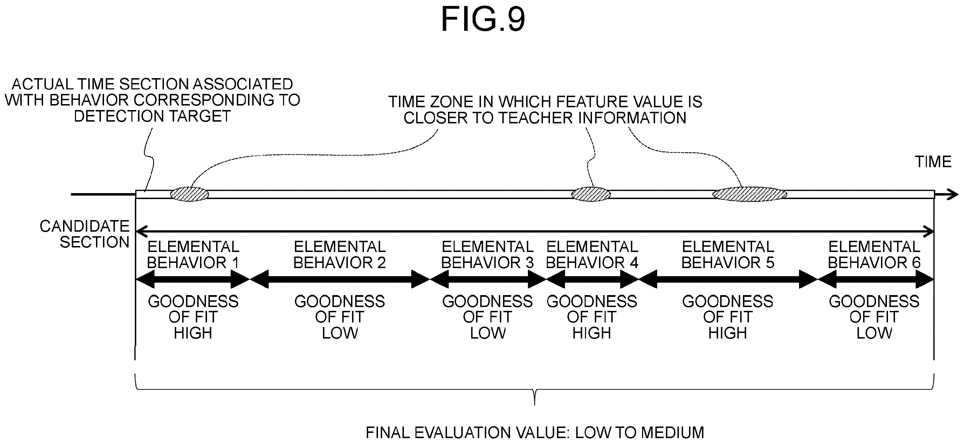

In contrast, as illustrated in FIG. 9, in the actual time section of the behavior corresponding to the detection target, in the case where a time zone in which the feature value is closer to the teacher information is sparsely distributed, that is, in the case where a large number of time zones in which a difference between the feature value and the teacher information is large, the number of elemental behavior sections indicating low goodness of fit is increased, and thus, the final evaluation value accordingly becomes in the range of a low to medium level. In this case, the subject candidate section is not determined as the behavior section that corresponds to the detection target. However, even in a case of the candidate section having the time zone in which the feature value is closer to the teacher information is sparsely distributed in the candidate section, there may sometimes be a case in which the time zone is desired to be detected as a behavior section in the case where the time zone in which the feature value is closer to the teacher information is present.

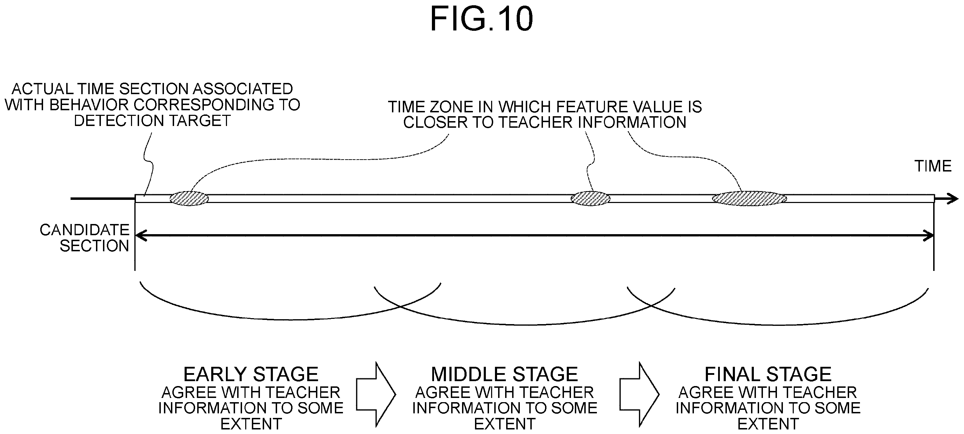

Thus, as illustrated in FIG. 10, the behavior section detection unit according to the present embodiment determines whether or not the candidate section is the behavior section by using a state in which the time zone in which the feature value agrees with the teacher information continues in terms of a coarse observation even if the time zone in which the feature value is closer to the teacher information is sparsely distributed. In the example illustrated in FIG. 10, in the case where evaluation is performed by dividing the candidate section into an early stage, a middle stage, and a final stage, the feature value agrees with the teacher information to some extent at each of the portions, and the evaluation value is accordingly high as the entirety of the candidate section, which is easily detected as the behavior section. In contrast, in the case where the time section associated with the video image in which a behavior that is different from the behavior corresponding to the detection target occurs is used as the candidate section, the elemental behaviors are not exhibited in the same order of the elemental behaviors indicated by the teacher information, so that the matched time zone hardly continues even if the feature value and the teacher information partially match. Accordingly, as illustrated in FIG. 10, by making granularity of the evaluation coarsen, such a candidate section is hardly determined as the behavior section that corresponds to the detection target. In the following, the behavior section detection unit according to the present embodiment will be described in detail.

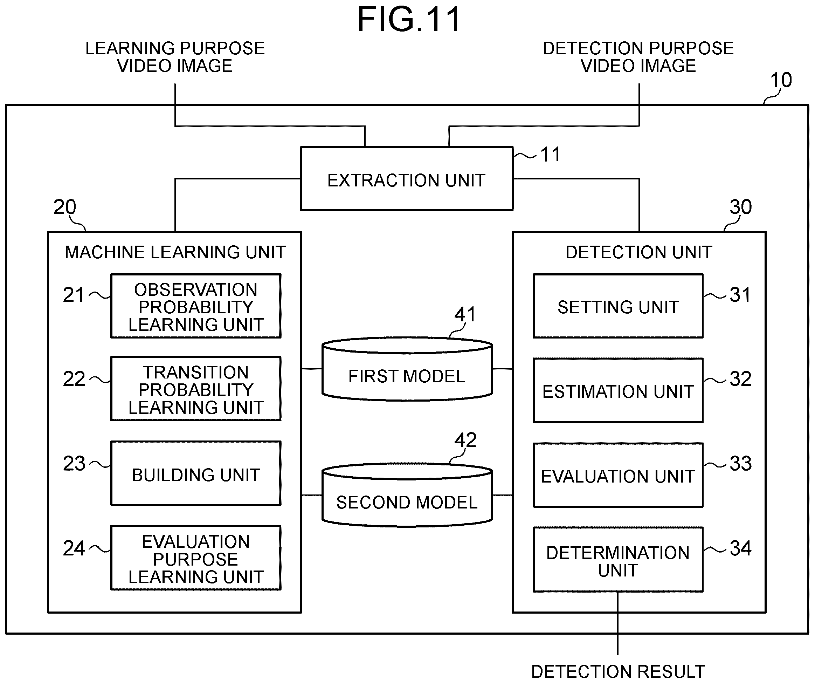

The behavior section detection unit 10 functionally includes, as illustrated in FIG. 11, an extraction unit 11, a machine learning unit 20, and a detection unit 30. The machine learning unit 20 further includes an observation probability learning unit 21, a transition probability learning unit 22, a building unit 23, and an evaluation purpose learning unit 24. The detection unit 30 further includes a setting unit 31, an estimation unit 32, an evaluation unit 33, and a determination unit 34. Furthermore, in a predetermined storage area included in the behavior section detection unit 10, the first model 41 and the second model 42 are stored.

The extraction unit 11 acquires a learning purpose video image at the time of machine learning. The learning purpose video image is a video image in which a behavior of a person is captured, and to which the teacher information that indicates a break of the behavior section indicating the time section associated with the behavior corresponding to the detection target and the elemental behavior section indicating the time section associated with each of the elemental behaviors included in the behavior corresponding to the detection target is given. The extraction unit 11 calculates a feature value related to a motion of a person from the video image associated with the behavior section included in the learning purpose video image, and extracts the time series feature values. Furthermore, the extraction unit 11 acquires a detection purpose video image at the time of detection. The detection purpose video image is a video image in which a behavior of a person is captured and is a video image in which a break of each of the behavior section corresponding to the detection target and the elemental behavior section is unknown. The extraction unit 11 also similarly extracts time series feature values from the detection purpose video image.

One example of a method for extracting the time series feature values from the video image performed by the extraction unit 11 will be specifically described. The extraction unit 11 detects an area (for example, bounding box) of a person by using a person detection technology from each of the frames constituting a video image (learning purpose video image or detection purpose video image), and performs a trace by associating the area of the same person detected from among the frames. In the case where a plurality of areas of persons are detected from a single frame, the extraction unit 11 identifies the area of the person targeted for determination on the basis of the size of the area, the position of the area in the frame, or the like. The extraction unit 11 performs image processing on the image included in the area of the person detected from each of the frames, and calculates the pose information on the basis of a joint position of the person, a connection relationship of the joints, and the like. The extraction unit 11 generates pieces of pose information arranged in time series by associating the pose information calculated for each of the frames with time information that has been associated with the frames.

In addition, the extraction unit 11 calculates motion information obtained in time series related to each of the body parts of the body from the pose information obtained in time series. The motion information may be, for example, the degree of bending of each of the body part, a speed of bending, or the like. Each of the body parts may be, for example, an elbow, a knee, or the like. In addition, the extraction unit 11 calculates a feature vector in which a value obtained by averaging the motion information included in a sliding time window by using the time direction at each of fixed time intervals based on the sliding time windows is defined as an element.

The extraction unit 11 delivers, at the time of machine learning, the extracted time series feature values and teacher information that indicates a break of behavior section and the elemental behavior section included in the learning purpose video image as the supervised data to the machine learning unit 20, and delivers, at the time of detection, the extracted time series feature values to the setting unit 31.

The machine learning unit 20 generates each of the first model 41 and the second model 42 by performing machine learning by using the supervised data that has been delivered from the extraction unit 11.

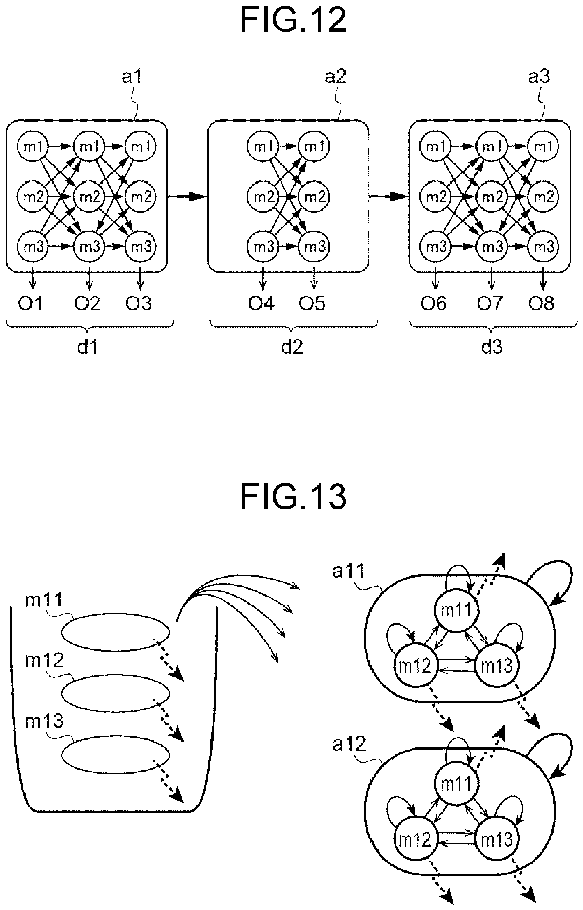

In the present embodiment, as one example of the first model 41 for estimating a behavior section in which a behavior corresponding to the detection target occurs, a hidden semi-Markov model (hereinafter, referred to as a "Hidden Semi-Markov Model (HSMM)") as illustrated in FIG. 12 is built. The HSMM has, in addition to the parameters of hidden Markov model (hereinafter, referred to as a "Hidden Markov Model (HMM)"), a probability distribution of duration time in each state is held as a parameter.

The HSMM according to the present embodiment includes a plurality of first HMMs in which each of the motions of a person is used as a state and a second HMM in which an elemental behavior is used as a state. In FIG. 12, m1, m2, and m3 are the states associated with the respective motions, whereas a1, a2, and a3 are the states associated with the respective elemental behaviors. The elemental behavior is a combination of a plurality of motions, whereas the motion is a combination of a plurality of poses. If the time series feature values related to the motions of a person extracted from a video image are given to the HSMM that has been built by setting the parameters, the HSMM estimates an optimum elemental behavior section. In FIG. 12, d1, d2, and d3 are one example of the elemental behavior sections.

There are observation probabilities and transition probabilities as the parameters of the HMM. In FIG. 12, O1, O2, ..., and O8 are one example of the observation probabilities, and the transition probabilities are associated with the arrows each of which connects the states. The observation probability is a probability that certain observation data is observed in each of the states, whereas the transition probability is a probability of a transition from a certain state to another state. If the order of the transitions are determined, the transition probability is not needed. In addition, the number of motions and the number of elemental behaviors, that is, the number of first HMMs and the number of second HMMs used in the above description are only examples and are not limited to the number exemplified in FIG. 12. In the following, each of the observation probability learning unit 21, the transition probability learning unit 22, the building unit 23, and the evaluation purpose learning unit 24 included in the machine learning unit 20 will be described in detail.

The observation probability learning unit 21 performs, as will be described below, training of an observation probability of each of the motions constituting the HSMM that is one example of the first model 41 by using time series feature values obtained by removing the teacher information from the supervised data (hereinafter, also referred to as "unsupervised data").

In the present embodiment, a behavior that is limited in order to achieve a certain work goal is defined as a detection target behavior. This type of behavior is a behavior of, for example, a routine work performed in a factory line, and has the following properties.

Property 1: a difference between the respective elemental behaviors constituting a behavior is a difference between combinations of a plurality of limited motions.

Property 2: a plurality of poses that are observed at the time of the same behavior performed are similar.

In the present embodiment, all of the behaviors are constituted of the motions included in a single motion group on the basis of the property 1. For example, as illustrated in FIG. 13, in the motion group, for example, three motions m11, m12, and m13 are included. For example, the motion m11 may be a motion of "raising an arm", the motion m12 may be a motion of "lowering an arm", and the motion m13 may be a motion of "extending an arm forward". The number of motions included in the motion group is not limited to the example illustrated in FIG. 13. In addition, the number of motions included in each of the elemental behaviors is not also limited to the example illustrated in FIG. 13.

For example, the observation probability learning unit 21 calculates an observation probability of each of the motions by using the mixture Gaussian distribution model (hereinafter, referred to as a "Gaussian Mixture Model (GMM)"). Specifically, the observation probability learning unit 21 estimates, by clustering the feature values delivered from the extraction unit 11, the parameters of the GMM generated from a mixture of the same number of Gaussian distributions as the number of motions. Then, the observation probability learning unit 21 assigns each of the Gaussian distributions constituting the GMM, in which the parameters have been estimated, as the probability distribution representing the observation probability of each of the motions.

The transition probability learning unit 22 calculates, as will be described below, on the basis of the supervised data, a transition probability between motions represented by the first HMM. Specifically, the transition probability learning unit 22 sorts, on the basis of the teacher information held by the supervised data, the time series feature values into each of the elemental behavior sections. Then, the transition probability learning unit 22 uses the time series feature values that have been sorted into each of the elemental behavior sections as the observation data, fixes the observation probability of each of the motions calculated by the observation probability learning unit 21, and calculates the transition probability between motions by using, for example, maximum likelihood estimation, an expectation-maximization (EM algorithm) algorithm, or the like.

In addition, time and efforts are needed to generate the supervised data, so that the transition probability learning unit 22 may increase an amount of supervised data by adding noise to the supervised data that corresponds to the master data.

The building unit 23 sets, on the basis of the duration time of each of the elemental behavior sections that are given by the teacher information, a probability distribution of the duration time for each of the elemental behaviors. For example, the building unit 23 sets the uniform distribution in a predetermined range with respect to the duration time of each of the elemental behavior sections given by the teacher information as the probability distribution of the elemental behavior in the duration time.

The building unit 23 builds the HSMM illustrated in, for example, FIG. 12 as the first model 41 by using the observation probability of each of the motions calculated by the observation probability learning unit 21, the transition probability between motions calculated by the transition probability learning unit 22, and the duration time that has been set for each of the elemental behaviors. The first model 41 is the HSMM in which the second HMM associated with each of the elemental behaviors is transitioned in the order of each of the elemental behaviors that are given by the teacher information after an elapse of the set duration time. In FIG. 12, O1, O2, ..., and O8 denote the observation probabilities calculated by the observation probability learning unit 21. In addition, the transition probabilities associated with the arrows among the motions m1, m2, and m3 that are included in each of the elemental behaviors a1, a2, a3 correspond to the transition probabilities calculated by the transition probability learning unit 22. In addition, d1, d2, and d3 denotes the duration time of each of the elemental behaviors. The building unit 23 stores the built first model 41 in a predetermined storage area.

The evaluation purpose learning unit 24 generates, by performing machine learning by using the supervised data delivered from the extraction unit 11, the second model 42 for estimating an evaluation result related to the evaluation section. The evaluation section is a section that is a combination of the elemental behavior sections. Specifically, the evaluation purpose learning unit 24 allows, on the basis of the elemental behavior section indicated by the teacher information corresponding to the supervised data delivered from the extraction unit 11, duplicates elemental behavior sections to be included among the evaluation sections, and sets the evaluation section by forming a combination of two or more consecutive elemental behavior sections.

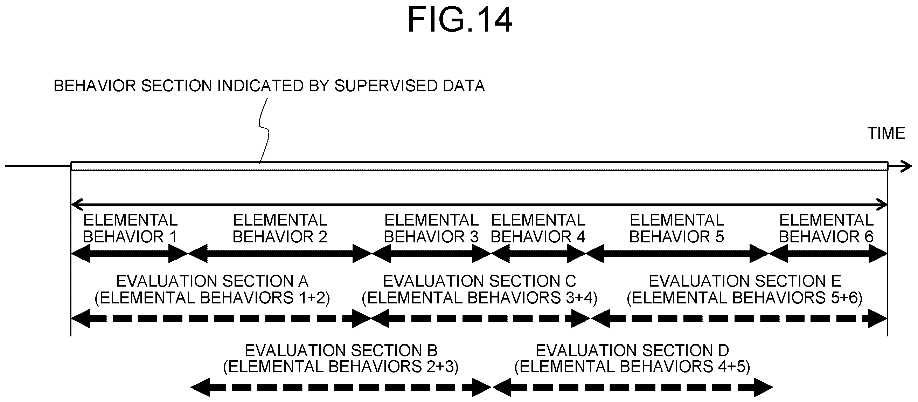

More specifically, the evaluation purpose learning unit 24 identifies a combination of the elemental behavior sections each of which includes a fixed percentage (for example, 20%) or more of a period of time for the behavior section. Then, the evaluation purpose learning unit 24 may set the evaluation section by shifting the time such that the identified combination of the start time starting from the start time of the previous combination is away from a fixed percentage (for example, 10%) or more of the time for the behavior section. For example, it is assumed, as illustrated in FIG. 14, a behavior section indicated by some supervised data is divided into elemental behavior sections 1, 2, ..., and 6. In this case, the evaluation purpose learning unit 24 may set, as one example, the evaluation sections indicated below.

An evaluation section A formed of a combination of the elemental behavior section 1 and the elemental behavior section 2

An evaluation section B formed of a combination of the elemental behavior section 2 and the elemental behavior section 3

An evaluation section C formed of a combination of the elemental behavior section 3 and the elemental behavior section 4

An evaluation section D formed of a combination of the elemental behavior section 4 and the elemental behavior section 5

An evaluation section E formed of a combination of the elemental behavior section 5 and the elemental behavior section 6

Furthermore, the evaluation purpose learning unit 24 sorts the time series feature values into each of the evaluation sections on the basis of the teacher information that is held by the supervised data. Then, the evaluation purpose learning unit 24 uses the time series feature values that are sorted into each of the evaluation sections as the observation data, fixes the observation probability of each of the motions calculated by the observation probability learning unit 21, and calculates the transition probability between motions by using, for example, the maximum likelihood estimation, the EM algorithm, or the like. As a result, the evaluation purpose learning unit 24 builds, when the time series feature values corresponding to the evaluation section is input as the observation data, the HMM that is associated with each of the evaluation sections and that outputs the observation probability of that observation data as the second model 42. The evaluation purpose learning unit 24 stores the built second model 42 in the predetermined storage area.

The detection unit 30 detects, on the basis of the time series feature values delivered from the extraction unit 11, from the detection purpose video image, a behavior section is the time section that is associated with the behavior corresponding to the detection target and that includes a plurality of elemental behaviors represented by a plurality of motions in a predetermined sequential order. In the following, each of the setting unit 31, the estimation unit 32, the evaluation unit 33, and the determination unit 34 included in the detection unit 30 will be described in detail.

The setting unit 31 sets a plurality of candidate sections by sliding the start time of the time series feature values delivered from the extraction unit 11 one time at a time, and sliding the end time associated with the respective start time to the time that is temporally after the start time one time at a time. In addition, the range of sliding the start time and the end time for setting the candidate section is not limited to one time but may be, for example, two time at a time, or three time at a time. The setting unit 31 delivers the set candidate section to the estimation unit 32.

The estimation unit 32 estimates, regarding each of the candidate sections, by inputting the time series feature values associated with the candidate section to the first model 41, each of the elemental behavior sections included in the candidate section. The estimation unit 32 delivers, to the evaluation unit 33, the information on the estimated elemental behavior section related to each of the candidate sections.

The evaluation unit 33 acquires, regarding each of the candidate sections, an evaluation result related to each of the evaluation sections by inputting, to the second model 42, the time series feature values associated with the evaluation section formed of a combination of the elemental behavior sections delivered from the estimation unit 32.

Specifically, the evaluation unit 33 sets, similarly to the evaluation section that has been set at the time at which the second model 42 has been built, the evaluation section formed of a combination of the elemental behavior sections to the candidate section. The evaluation unit 33 inputs the time series feature values associated with the evaluation section to each of the HMMs that are associated with the respective evaluation sections and that are the second model 42. As a result, the evaluation unit 33 estimates the observation probabilities that are output from the HMMs related to all of the types of the evaluation sections as a goodness of fit with respect to the second model 42 for the time series feature values that are associated with the subject evaluation section. The evaluation unit 33 calculates the relative goodness of fit obtained by performing a normalization process on the goodness of fit that has been estimated about each of the evaluation sections and that corresponds to an amount of all of the types of the evaluation sections. For example, the evaluation unit 33 performs the normalization process such that the total amount of the goodness of fit corresponding to all of the types of the evaluation sections becomes one. Then, the evaluation unit 33 selects, from each of the evaluation sections, the relative goodness of fit about the type of the evaluation section that is associated with the combination of the elemental behavior sections that are associated with the elemental behaviors in accordance with the order included in the behavior corresponding to the detection target, and calculates a final evaluation value by integrating the selected relative goodness of fit. For example, the evaluation unit 33 may calculate an average, a median value, an infinite product, or the like of the selected relative goodness of fit as an evaluation value.

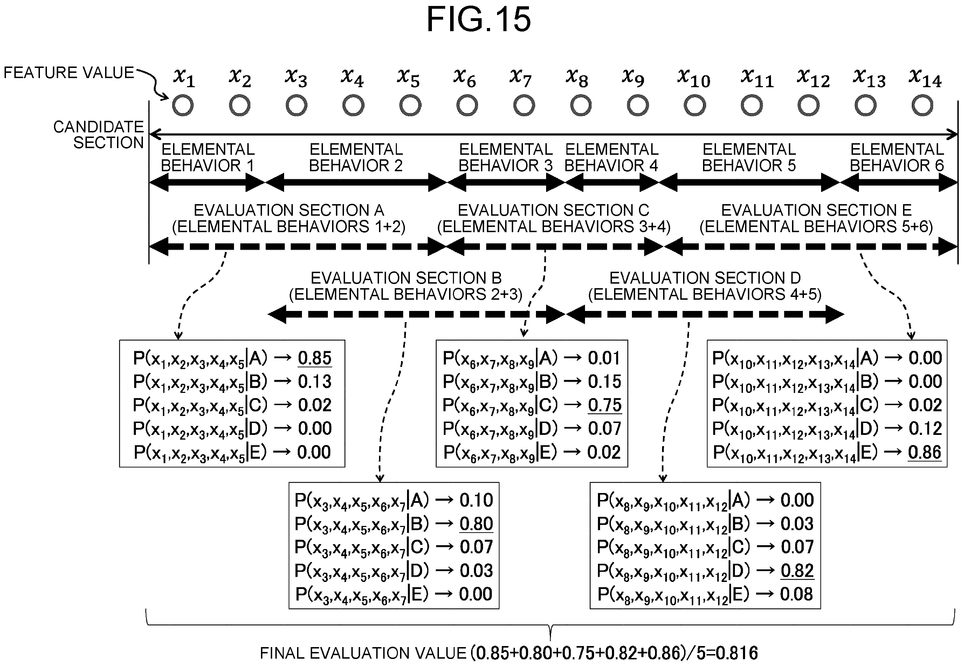

For example, as illustrated in FIG. 15, it is assumed that the feature values $x_1$ to $x_5$ are sorted to the evaluation section A, the feature values $x_3$ to $x_7$ are sorted to the evaluation section B, the feature values $x_6$ to $x_9$ are sorted to the evaluation section C, the feature values $x_8$ to $x_{12}$ are sorted to the evaluation section D, and the feature values $x_{10}$ to

$x_{14}$ are sorted to the evaluation section E. In this case, as described below, the evaluation unit 33 calculates a goodness of fit related to each of the evaluation sections.

evaluation section A: P $(x_1, x_2, x_3, x_4, x_5|X)$
evaluation section B: P $(x_3, x_4, x_5, x_6, x_7|X)$
evaluation section C: P $(x_6, x_7, x_8, x_9|X)$
evaluation section D: P $(x_8, x_9, x_{10}, x_{11}, x_{12}|X)$
evaluation section E: P $(x_{10}, x_{11}, x_{12}, x_{13}, x_{14}|X)$
where, X = A, B, C, D, and E

The evaluation unit 33 calculates, for example, P $(x_1, x_2, x_3, x_4,$ and $x_5|A)$ as indicated by Equation (1) below, where, st denotes a state of individual time related to an internal state transition of the evaluation section A.

$$P(x_1, x_2, x_3, x_4, x_5|A)$$
$$= \sum_{s_1, s_2, s_3, s_4, s_5} P(s_1)P(x_1|s_1)P(s_2|s_1)P(x_2|s_2)P(s_3|s_2)P(x_3|s_3)P(s_4|s_3)P(x_4|s_4)P(s_5)P(x_5|s_5)$$

$$\cdots(1)$$

In addition, Equation (1) indicated above is an example of a case in which the second model 42 is built by the HMM in consideration of the sequential order of the elemental behaviors. If the second model 42 is built by the GMM without any consideration of the sequential order of the elemental behaviors, P $(x_1, x_2, x_3, x_4, x_5|A)$ is given by Equation (2) below.

$$P(x_1, x_2, x_3, x_4, x_5|A) = P(x_1|A)P(x_2|A)P(x_3|A)P(x_4|A)P(x_5|A) \qquad \cdots(2)$$

Then, for example, as illustrated in FIG. 15, the evaluation unit 33 calculates a relative goodness of fit related to each of the evaluation sections, and selects the relative goodness of fits (the value indicated by the underlines illustrated in FIG. 15) related to the subject evaluation section. For example, regarding the evaluation section A, the evaluation unit 33 selects the relative goodness of fit related to A out of the relative goodness of fits calculated about each of A, B, C, D, and E. The evaluation unit 33 calculates a final evaluation value by averaging the selected relative goodness of fits. The evaluation unit 33 delivers the calculated final evaluation value to the determination unit 34.

The determination unit 34 determines whether or not the candidate section is the behavior section corresponding to the detection target on the basis of the each of the evaluation results related to the evaluation sections included in the candidate section. Specifically, the determination unit 34 determines whether or not the final evaluation value delivered from the evaluation unit 33 is equal to or larger than a predetermined threshold. If the final evaluation value is equal to or larger than the predetermined threshold, the determination unit 34 determines that the final candidate section as the behavior section. For example, in the example illustrated in FIG. 15, if the threshold is defined as 0.5, it is determined that the candidate section illustrated in FIG. 15 is the behavior section corresponding to the detection target. The determination unit 34 detects the section that has been determined to be the behavior section from the detection purpose video image, and outputs the detected section as the detection result. In addition, if both of the candidate sections that are determined to be the behavior section are overlapped, the determination unit 34 may determine that the candidate section in which the final evaluation value is the highest is the behavior section with priority.

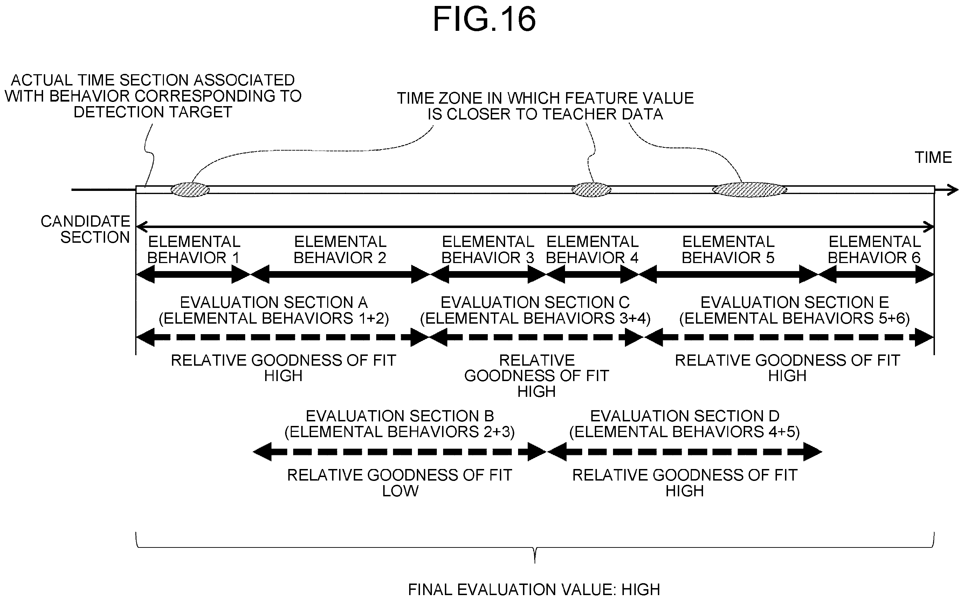

As described above, by setting the evaluation section formed of a combination of the elemental behavior sections to the candidate section, for example, as illustrated in FIG. 16, even if the time zone in which feature value is closer to the teacher data is sparsely distributed, the number of evaluation sections in which the relative goodness of fit is high is increased, and thus, the final evaluation value becomes high. As a result, the subject candidate section is easily determined as the behavior section corresponding to the detection target.

Explanation of abnormality detection unit 50

The abnormality detection unit 50 illustrated in FIG. 3 acquires the video image in which an employee who perform work in the factory 200 has been captured, and inputs the acquired video image to the machine learning model, whereby the abnormality detection unit 50 determines whether or not the elemental behavior performed by the employee for each section that is obtained by dividing the video image is abnormal. Then, if the abnormality detection unit 50 determines that the elemental behavior is abnormal, the abnormality detection unit 50 extracts, from the acquired video image, the video image included in the section in which the elemental behavior is determined to be abnormal. After that, the abnormality detection unit 50 associates the extracted video image included in the section with the category of the elemental behavior that has been determined to be abnormal and transmits the associated data.

For example, the abnormality detection unit 50 compares the standard rule 43 in which a normal elemental behavior is associated for each section with each of the elemental behaviors that have been identified to be performed by the employee for each section that is obtained by dividing the video image, and determines that the section in which the elemental behavior that does not agree with the standard rule 43 is included is the section in which the elemental behavior is determined to be abnormal. In other word, the detection target is an abnormal behavior at the time at which the person manufactures a product.

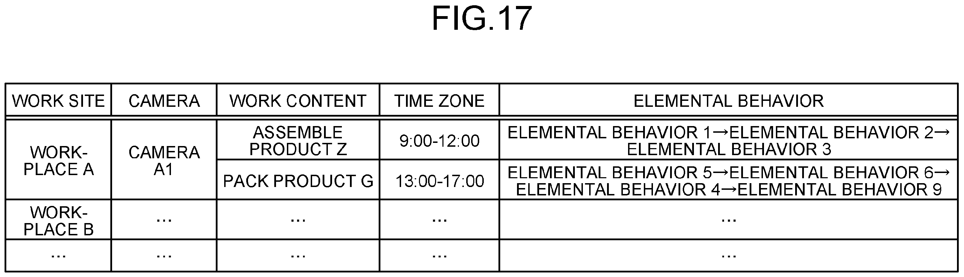

FIG. 17 is a diagram illustrating the standard rule 43. As illustrated in FIG. 17, the standard rule 43 is information in which items of "a work site, a camera, a work content, a time zone, and an elemental behavior" are associated each other. The "work site" indicates a location of work corresponding to the target, the "camera" is an identifier for identifying the camera 201 installed in the work site. The "work content" indicates the work content corresponding to the target, the "time zone" indicates a time zone in which the work corresponding to the target, and the "elemental behavior" is a combination of the motions of a person at the time at which each of the processes of manufacturing performed by the person and indicates a sequential order of normal elemental behaviors to be performed in each of the sections.

In the example illustrated in FIG. 17, in a work site A in which a camera A1 is installed, configuration has been set up in advance such that the elemental behaviors of an "elemental behavior 1", an "elemental behavior 2", and an "elemental behavior 3" of assembling a product Z are to be sequentially performed in the time zone between 9:00 and 12:00 inclusive.

In addition, as illustrated in FIG. 17, the standard rule 43 is the information, as one example, in which a sequential order of the normal elemental behaviors to be performed for each section is defined. In this case, the abnormality detection unit 50 compares, for each section obtained by dividing the video image, the sequential order of the elemental behaviors defined in the standard rule 43 with the sequential order of the elemental behaviors that are performed by the employee and that are identified from the video image, and determines that the section in which the sequential order of the elemental behaviors is different from the sequential order of the elemental behaviors defined in the standard rule is the section in which the elemental behavior is determined to be abnormal. In addition, the normal sequential order of the elemental behaviors need not always include a plurality of elemental behaviors, but may include a single elemental behavior.

Then, if each of the elemental behaviors corresponding to the detection target has been estimated, the abnormality detection unit 50 identifies a correct elemental behavior from the standard rule 43 by using the work site, the camera, the time zone, and the like, and performs abnormality detection by comparing each of the estimated elemental behaviors with the correct elemental behavior. After that, the abnormality detection unit 50 establishes a session with the cloud server 100, and notifies, by using the established session, the cloud server 100 of the section in which abnormality has been detected, a category of the elemental behavior that has been detected to be abnormal and that is associated with the subject section has been detected, and the like. In addition, when the abnormality detection unit 50 transmits the video image included in the subject section and the category of the elemental behavior that has been determined to be abnormal to the cloud server 100, the abnormality detection unit 50 is also able to transmit an instruction to allow the cloud server 100 to classify and display the video image included in in the subject section on the basis of the category of the elemental behavior designated by the user.

Here, the abnormality detection unit 50 performs abnormality detection by using the result of the process performed by the behavior section detection unit 10, and, in addition, is able to perform abnormality detection and abnormality transmission at some timings in the course of the process performed by the behavior section detection unit 10.

Pattern 1

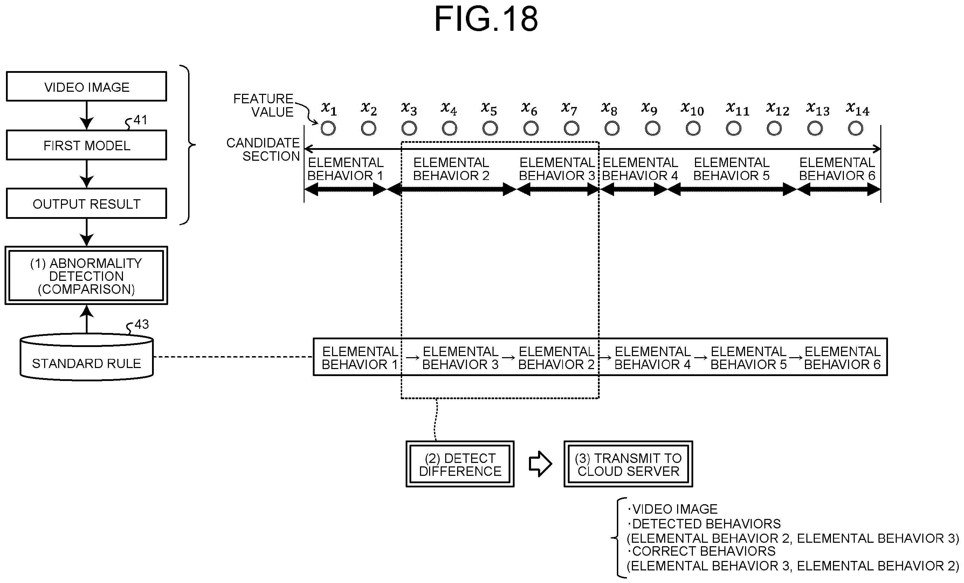

First, an example in which the abnormality detection unit 50 performs abnormality detection and abnormality transmission by using the result of the process performed by the first model 41 will be described. FIG. 18 is a diagram illustrating a specific example 1 of the abnormality transmission. As illustrated in FIG. 18, the behavior section detection unit 10 extracts feature values from the video image that is used for detection, and estimates, after having set a candidate section, the elemental behavior section on the basis of the first model 41 and the feature values associated with the candidate section. In the elemental behavior section that is estimated here, the elemental behaviors 1 to 6 are included.

Thus, the abnormality detection unit 50 compares the normal elemental behaviors of "the elemental behavior 1 → the elemental behavior 3 → the elemental behavior 2 → the elemental behavior 4 → the elemental behavior 5 → the elemental behavior 6" stored in the standard rule 43 with each of the estimated elemental behaviors of "the elemental behavior 1 → the elemental behavior 2 → the elemental behavior 3 → the elemental behavior 4 → the elemental behavior 5 → the elemental behavior 6" (see (1) in FIG. 18). Then, the abnormality detection unit 50 detects that the estimated elemental behaviors of "the elemental behavior 2 → the elemental behavior 3" are different from the elemental behaviors of "the elemental behavior 3 → the elemental behavior 2" (see (2) in FIG. 18).

Consequently, since abnormality has been detected, the abnormality detection unit 50 transmits the video image included in the abnormal section and abnormality information to the cloud server 100 (see (3) in FIG. 18). For example, the abnormality detection unit 50 transmits, to the cloud server 100, the video image including abnormality detection, the section "01:00:10 to 01:50:15" in which abnormality has been detected in the subject video image, the category of the elemental behaviors (abnormal behaviors) that correspond to items of tasks to "screw the part A, and screw the part B" and that have been detected to be abnormal, the normal behaviors that correspond to items of tasks to "screw the part A, and bond part A using a screw", and the like registered in the standard rule 43.

By doing so, the abnormality detection unit 50 is able to notify the cloud server 100 of the elemental behavior that is highly likely to be an erroneous behavior from among each of the estimated elemental behaviors.

Pattern 2

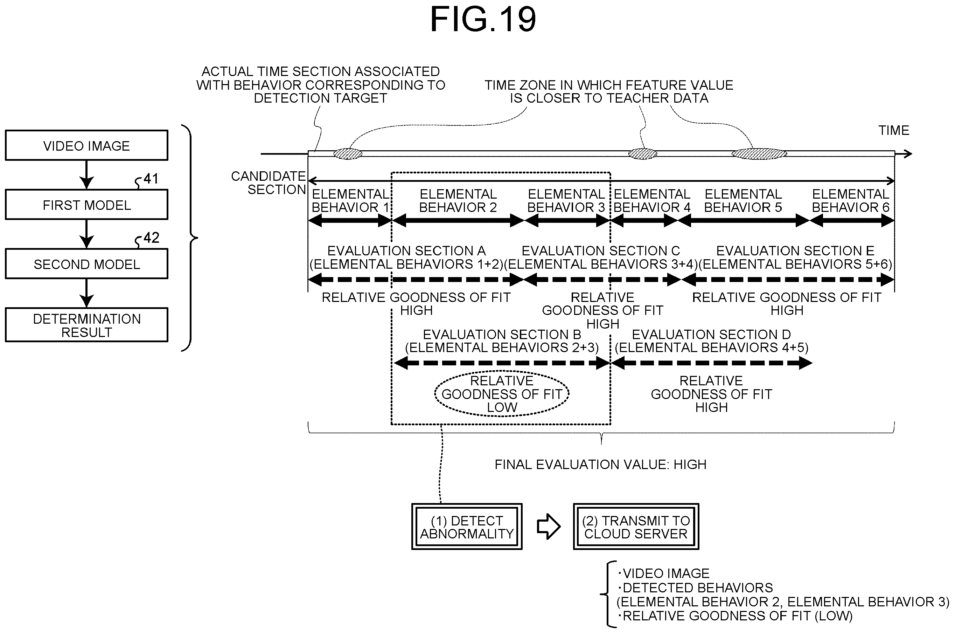

In the following, an example in which the abnormality detection unit 50 performs abnormality detection and abnormality transmission by using the result of the process performed by the second model 42 will be described. FIG. 19 is a diagram illustrating a specific example 2 of the abnormality transmission. As illustrated in FIG. 19, the behavior section detection unit 10 extracts the feature values from the video image used for the detection, and estimates, after having set a candidate section, the elemental behavior section on the basis of the first model 41 and the feature values associated with the candidate section. In the elemental behavior section that is estimated here, the elemental behaviors 1 to 6 are included.

After that, the behavior section detection unit 10 calculates an evaluation value for each evaluation sections, and determines whether or not the candidate section is a behavior section on the basis of the evaluation value and the threshold.

Thus, the abnormality detection unit 50 detects the "evaluation section B", in which it has been determined by the behavior section detection unit 10 that the relative goodness of fit is equal to or less than the threshold, is abnormal from among the evaluation section A of "the elemental behavior 1, and the elemental behavior 2", the evaluation section B of "the elemental behavior 2, and the elemental behavior 3", the evaluation section C of "the elemental behavior 3, and an elemental behavior 4", the evaluation section D of "the elemental behavior 4, and the elemental behavior 5", and the evaluation section D of "the elemental behavior 5, and the elemental behavior 6" (see (1) in FIG. 19.

Consequently, the abnormality detection unit 50 transmits the information on the evaluation section B that has been determined to be abnormal to the cloud server 100 (see (2) in FIG. 19). For example, the abnormality detection unit 50 transmits, to the cloud server 100, the video image including the evaluation section B, information "01:15:30 to 01:50:40" on the evaluation section B, the relative goodness of fit (low), and the like.

By doing so, the abnormality detection unit 50 is able to transmit the section having a low evaluation from among the candidate sections and the information on that section to the cloud server 100, so that it is possible to improve a technique for identifying a section, aggregate the elemental behaviors in a section having a low evaluation, and the like.

Pattern 3

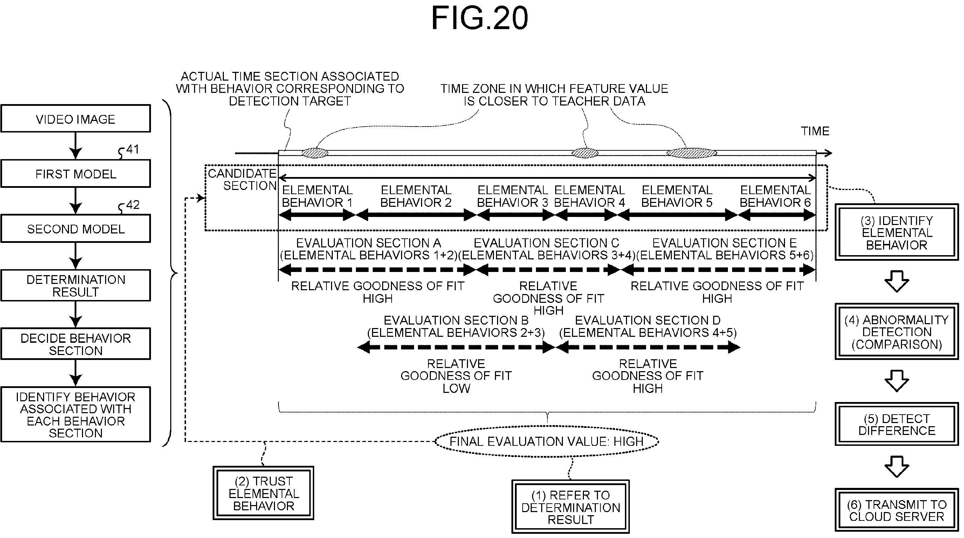

In the following, an example in which the abnormality detection unit 50 performs abnormality detection and abnormality transmission in the case where each of the evaluation sections is identified to be a normal section on the basis of the result of the process performed by the second model 42. FIG. 20 is a diagram illustrating a specific example 3 of abnormality transmission. As illustrated in FIG. 20, the behavior section detection unit 10 extracts the feature values from a video image that is used for detection, and estimates, after having set a candidate section, the elemental behavior section on the basis of the first model 41 and the feature values associated with the candidate section. In the elemental behavior section that is estimated here, the elemental behaviors 1 to 6 are included.

After that, the behavior section detection unit 10 calculates an evaluation value for each evaluation section, and determines whether or not the candidate section is a behavior section on the basis of the evaluation value and the threshold. Then, the behavior section detection unit 10 determines that the final evaluation value is "high" on the basis of each of the evaluation values of the evaluation section A of "the elemental behavior 1, and the elemental behavior 2", the evaluation section B of "the elemental behavior 2, and the elemental behavior 3", the evaluation section C of "the elemental behavior 3, and the elemental behavior 4", the evaluation section D of "the elemental behavior 4, and the elemental behavior 5", and the evaluation section D of "the elemental behavior 5, and the elemental behavior 6". Consequently, the behavior section detection unit 10 identifies that the elemental behaviors 1 to 6 in each of the evaluation sections and the sequential order thereof are the detection result.

Thus, the abnormality detection unit 50 refers to the final evaluation value indicating "high" obtained by the behavior section detection unit 10 (see (1) in FIG. 20), trusts the estimation result obtained by the behavior section detection unit 10 (see (2) in FIG. 20), and acquires the elemental behaviors 1 to 6 and the sequential order thereof (see (3) in FIG. 20).

Then, the abnormality detection unit 50 compares normal elemental behaviors of "the elemental behavior 1 → the elemental behavior 3 → the elemental behavior 2 → the elemental behavior 4 → the elemental behavior 5 → the elemental behavior 6" that are stored in the standard rule 43 with each of the estimated elemental behaviors of "the elemental behavior 1 → the elemental behavior 2 → the elemental behavior 3 → the elemental behavior 4 → the elemental behavior 5 → the elemental behavior 6" (see (4) in FIG. 20). The abnormality detection unit 50 detects that the estimated elemental behaviors of "the elemental behavior 2 → the elemental behavior 3" are different from the normal elemental behaviors of "the elemental behavior 3 → the elemental behavior 2" (see (5) in FIG. 20).

Consequently, since abnormality has been detected, the abnormality detection unit 50 transmits the video image included in the abnormal section and the abnormality information to the cloud server 100 (see (6) in FIG. 20). By doing so, the abnormality detection unit 50 is able to notify the cloud server 100 of the elemental behavior that is highly likely to be an erroneous behavior based on the assumption of a correct elemental behavior as the target for the evaluation.

Functional configuration of cloud server 100

As illustrated in FIG. 3, the cloud server 100 includes a communication unit 101, a display unit 102, a storage area 103, and a control unit 105.

The communication unit 101 is a processing unit that performs control of communication with another device and is implemented by, for example, a communication interface, or the like. For example, the communication unit 101 transmits and receives various kinds of information to and from the behavior recognition device 1.

The display unit 102 is a processing unit that displays and outputs various kinds of information and is implemented by, for example, a display, a touch panel, or the like. For example, the display unit 102 displays a Web screen for browsing information on a video image, information on an elemental behavior that has been determined to be abnormal, and the like.

The storage area 103 is a processing unit that stores therein various kinds of data and the program executed by the control unit 105 and is implemented by, for example, a memory, a hard disk, or the like. The storage area 103 stores therein a standard rule 104. In addition, the standard rule 104 is the same as the standard rule 43, so that a detailed description of the standard rule 104 is omitted.

The control unit 105 is a processing unit that manages the overall control of the cloud server 100 and is implemented by, for example, a processor, or the like. The control unit 105 includes a reception unit 106 and a display output unit 107. Furthermore, the reception unit 106 and the display output unit 107 are implemented by, for example, and electronic circuit including the processor, a process executed by the processor, or the like.

The reception unit 106 is a processing unit that receives various kinds of information from the behavior recognition device 1. For example, if the reception unit 106 receives a session request from the behavior recognition device 1, the reception unit 106 accepts session establishment from the behavior recognition device 1, and establishes a session. Then, the reception unit 106 receives, by using the session, the information on an abnormal behavior transmitted from the behavior recognition device 1, and stores the information in the storage area 103, or the like.

The display output unit 107 is a processing unit that displays and outputs a Web screen for browsing the information on the video image, the information on the elemental behavior that has been determined to be abnormal, or the like in accordance with a request from a user. Specifically, if the display output unit 107 receives a display request from an administrator or the like in the factory, the display output unit 107 outputs the Web screen, generates and outputs various kinds of information via the Web screen.

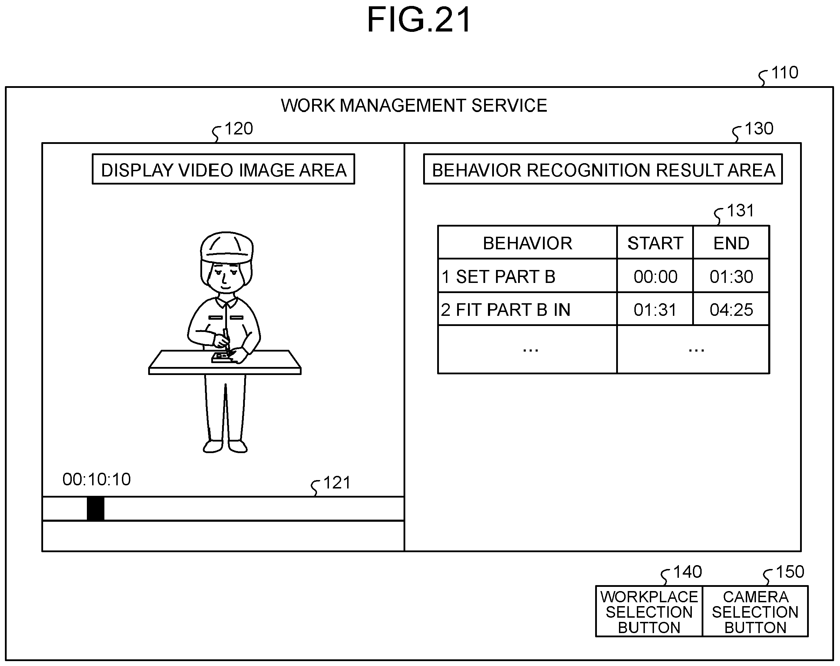

FIG. 21 is a diagram illustrating a display example of the Web screen. As illustrated in FIG. 21, the display output unit 107 displays and outputs a Web screen 110 indicating a work management service. The Web screen 110 includes a video image display area 120 in which a video image is displayed, and a behavior recognition result area 130 in which the behavior recognition result obtained by the behavior recognition device 1 is displayed, and then, a video image displayed in the video image display area 120 and the behavior recognition result displayed in the behavior recognition result area 130 are switched by a workplace selection button 140 or a camera selection button 150.

The video image display area 120 includes a selection bar 121 that is capable of selecting the time to be displayed, so that a user is able to move forward or rewind the time zone of the video image displayed on the moving the selection bar 121 and the video image display area 120. In the behavior recognition result area 130, a recognition result 131 that includes each of the behaviors that have been recognized by the behavior recognition device 1 and the time zone (between start and end time) associated with the video image in which each of the behaviors is captured.

The display output unit 107 displays the video image on the video image display area 120, and, when it comes to time to display the detected elemental behavior included in the video image that is being displayed, the display output unit 107 generates a record of "behavior, start, and end" on the screen of the recognition result 131 included in the behavior recognition result area 130, and outputs the information on the elemental behavior.

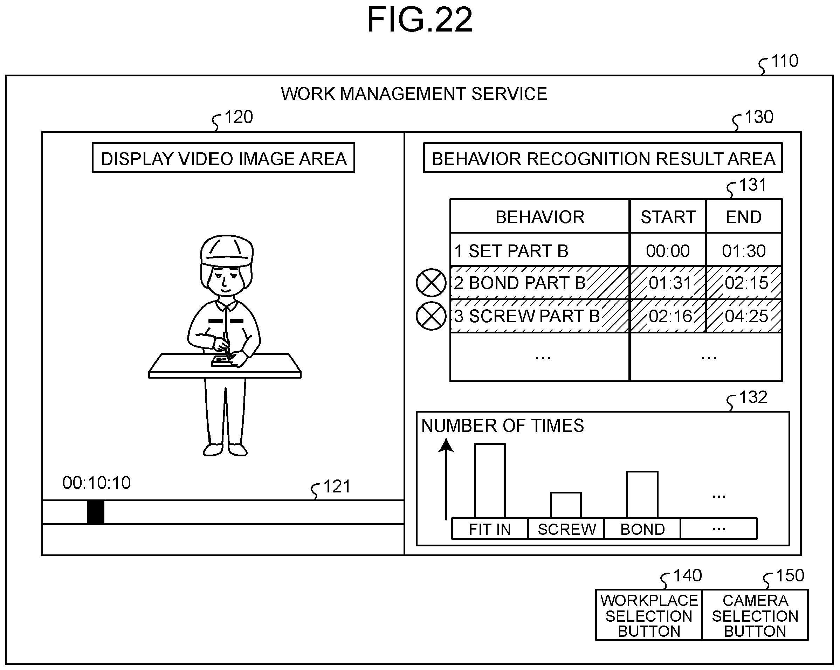

Here, if an abnormal elemental behavior has been detected, the display output unit 107 displays information so as to recognize that the elemental behavior is abnormal on the screen of the recognition result 131 included in the behavior recognition result area 130. FIG. 22 is a diagram illustrating a display example of a Web screen at the time of abnormality detection. As illustrated in FIG. 22, when the display output unit 107 displays an elemental behavior that has been detected to be abnormal in the recognition result 131, the display output unit 107 improves visibility with respect to the user. In addition, the display output unit 107 is able to count that number of times of abnormality detection for each behavior performed in the work site in response to a request received from the user, and is able to display history information 132 by using a graph, or the like.

Flow of process

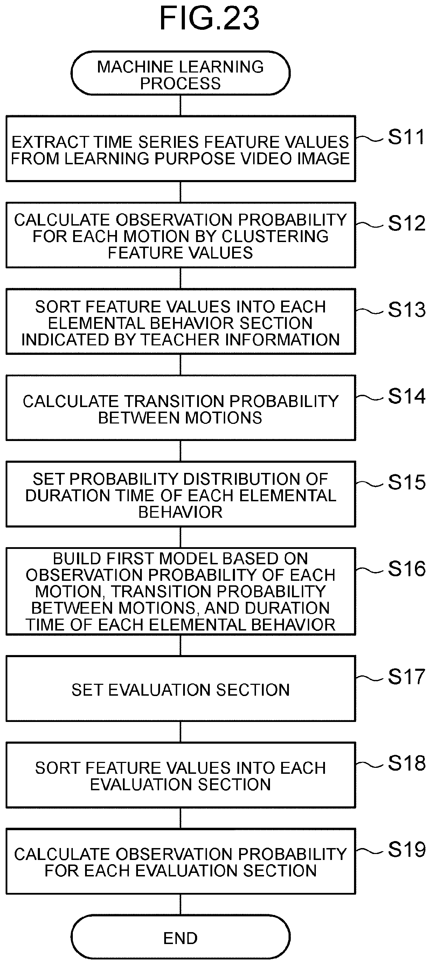

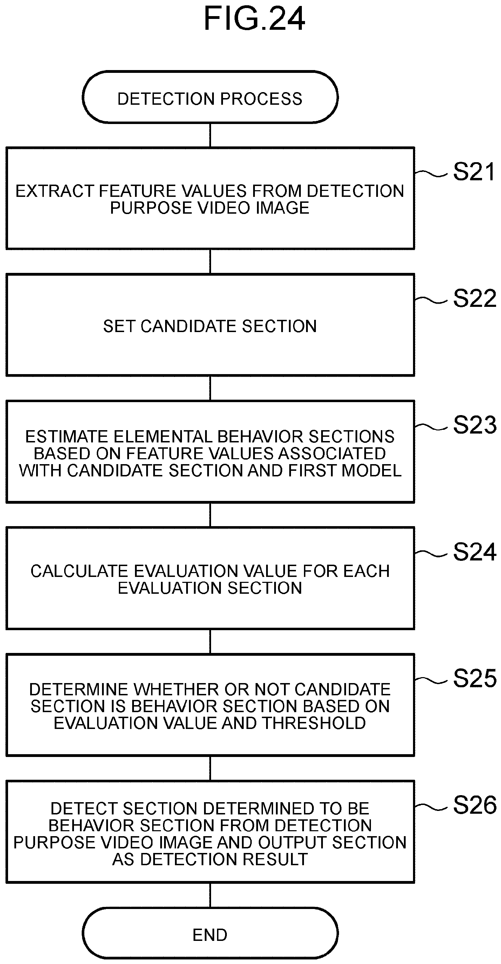

In the following, an operation of the behavior recognition device 1 according to the present embodiment will be described. When a learning purpose video image is input to the behavior section detection unit 10, and an instruction to perform machine learning on the first model 41 and the second model 42 is given, the machine learning process illustrated in FIG. 23 is performed in the behavior section detection unit 10. In addition, when the detection purpose video image is input to the behavior section detection unit 10, and an instruction to detect a behavior section corresponding to the detection target is given, the detection process illustrated in FIG. 24 is performed in the behavior section detection unit 10. In addition, the machine learning process and the detection process are one example of the behavior section detection method according to the disclosed technology.

First, the machine learning process illustrated in FIG. 23 will be described.

At Step S11, the extraction unit 11 acquires the learning purpose video image that has been input to the behavior section detection unit 10, and extracts time series feature values related to the motions of a person from the video image included in the behavior section in the learning purpose video image.

Then, at Step S12, the observation probability learning unit 21 estimates parameters of the GMM generated from a mixture of the same number of Gaussian distributions as the number of motions by clustering the feature values extracted at Step S11 described above. Then, the observation probability learning unit 21 assigns each of the Gaussian distributions constituting the GMM, in which the parameters have been estimated, as the probability distribution representing the observation probability of each of the motions.

Then, at Step S13, the transition probability learning unit 22 sorts the time series feature values extracted at Step S11 described above into each of the elemental behavior sections indicated by the teacher information held by the supervised data. After that, at Step S14, the transition probability learning unit 22 uses the time series feature values that have been sorted into each of the elemental behavior sections as the observation data, fixes the observation probability of each of the motions calculated at Step S12 described above, and calculates the transition probability between motions.

Then, at Step S15, the building unit 23 sets, on the basis of the duration time of each of the elemental behavior sections that are given by the teacher information, the probability distribution of the duration time of each of the elemental behaviors. Then, at Step S16, the building unit 23 builds the HSMM as the first model 41 by using the observation probability of each of the motions calculated at Step S12 described above, the transition probability between motions calculated at Step S14 described above, and the duration time of each of the elemental behaviors that has been set at Step S15 described above. Then, the building unit 23 stores the built first model 41 in a predetermined storage area.

Then, at Step S17, the evaluation purpose learning unit 24 allows, on the basis of the elemental behavior section indicated by the teacher information corresponding to the supervised data delivered from the extraction unit 11, duplicate elemental behavior sections to be included among the evaluation sections, and sets the evaluation section by forming a combination of two or more consecutive elemental behavior sections. Then, at Step S18, the evaluation purpose learning unit 24 sorts the time series feature values into each of the evaluation sections on the basis of the teacher information held by the supervised data.

Then, at Step S19, the evaluation purpose learning unit 24 uses time series feature values that are sorted into each of the evaluation sections as the observation data, fixes the observation probability of each of the motions calculated at Step S12 described above, and calculates the transition probability between motions, so that the evaluation purpose learning unit 24 calculates the observation probability in each of the evaluation sections. As a result, the evaluation purpose learning unit 24 builds, when the time series feature values corresponding to the evaluation section is input as the observation data, the HMM that is associated with each of the evaluation sections and that outputs the observation probability of that observation data as the second model 42. Then, the evaluation purpose learning unit 24 stores the built second model 42 in a predetermined storage area, and ends the machine learning process.

In the following, the detection process illustrated in FIG. 24 will be described.

At Step S21, the extraction unit 11 acquires the detection purpose video image that has been input to the behavior section detection unit 10, and extracts the time series feature values related to the motions of the person from the detection purpose video image. Then, at Step S22, the setting unit 31 sets a plurality of candidate sections by sliding the start time of the time series feature values that have been extracted at Step S21 described above one time at a time, and sliding the end time associated with the respective start time to the time that is temporally after the start time one time at a time. The processes performed at Steps S23 to S25 described below are performed in each of the candidate sections.

Then, at Step S23, the estimation unit 32 estimates each of the elemental behavior sections included in the candidate section by inputting the time series feature values associated with the candidate sections to the first model 41. Then, at Step S24, the evaluation unit 33 sets, similarly to the evaluation section that has been set at the time at which the second model 42 has been built, the evaluation section formed of a combination of the elemental behavior sections to the candidate section. Then, the evaluation unit 33 inputs the time series feature values associated with the evaluation section to each of the HMMs that are associated with each of the evaluation sections and that are the second model 42, so that the evaluation unit 33 estimates, as the goodness of fit, all of the types of the evaluation sections with respect to the second model 42 for the time series feature values associated with each of the evaluation sections. Then, the evaluation unit 33 calculates the relative goodness of fit obtained by performing a normalization process on the goodness of fit that has been estimated about each of the evaluation sections and that corresponds to an amount of all of the types of the evaluation sections. Furthermore, the evaluation unit 33 selects, from each of the evaluation sections, the relative goodness of fit about the type of the evaluation section that is associated with the combination of the elemental behavior sections that are associated with the elemental behaviors in accordance with the order included in the behavior corresponding to the detection target, and calculates a final evaluation value by integrating the selected relative goodness of fit.

Then, at Step S25, the determination unit 34 determines whether or not the candidate section is the behavior section by determining whether or not the final evaluation value calculated at Step S24 described above is equal to or later than the predetermined threshold. Then, at Step S26, the determination unit 34 detects, from the detection purpose video image, the section that has been determined to be the behavior section, outputs the obtained result as the detection result, and ends the detection process.

As described above, the behavior section detection unit 10 according to the present embodiment extracts the time series feature values from the video image in which the behavior of the person has been captured. In addition, the behavior section detection unit 10 estimates the elemental behavior section included in the candidate section by inputting the time series feature values that are associated with the candidate section that is a part of the section included in the video image to the first model. Then, the behavior section detection unit 10 acquires the evaluation result related to each of the evaluation sections by inputting, to the second model, the time series feature values associated with the evaluation section that is a combination of the elemental behavior sections, and determines whether or not the candidate section is the behavior section corresponding to the detection target on the basis of each of the evaluation results related to the evaluation sections. As a result, it is possible to appropriately and easily detect the time section in which the designated behavior has occurred in the video image of the person. In other words, the behavior recognition device 1 according to the present embodiment improves the function of a computer.

Furthermore, in the case where the elemental behavior section and the evaluation section are set to be the same section and the same model is used, when the elemental behavior section is estimated, estimation is performed such that a goodness of fit increases in the candidate section, so that a high evaluation tends to be accidentally obtained even in an erroneous candidate section. In contrast, in the behavior recognition device 1 according to the present embodiment, the first model for estimating the elemental behavior section is different from the second model for calculating the evaluation value, so that it is hard to obtain a high evaluation in a candidate section that is associated with time that does not corresponds to a behavior targeted for detection, that is, the candidate section in which a low evaluation is desired to be obtained. This is because, by using different models between estimation of the elemental behavior section and calculation of the evaluation value, estimation of the elemental behavior section does not intend to directly increase the goodness of fit.

In addition, a motion is frequently changed at the boundary between the elemental behaviors, by setting a section formed of a combination of the elemental behavior sections to the evaluation section, the boundary between the evaluation sections also corresponds to the time at which the motion is changed. As a result, a combination of the elemental behaviors represented by the model (in the example described above in the embodiment, the HMM) of each of the evaluation sections constituting the second model becomes clear. In other words, a difference between the models of the evaluation sections becomes clear. Consequently, it is possible to calculate a more appropriate evaluation value.

In addition, it is possible to prevent each of the evaluation sections from being too coarse as the evaluation index by permitting overlapping of the elemental behavior sections, and it is possible to obtain a higher evaluation in a case in which the time zones in each of which the feature value is closer to the teacher data are uniformly generated in the candidate section. For example, it is assumed that, in the example illustrated in FIG. 16, overlapping of the elemental behavior sections is not permitted, and the evaluation sections A, C, and E are set. In this case, since the time zone in which the feature value is closer to the teacher data is not generated in the elemental behavior sections 2 and 3, the evaluation sections A and C tend to be a low evaluation, the two evaluation sections among the three evaluation sections indicate a low evaluation, which possibly indicates a low evaluation as a whole. In contrast, as illustrated in FIG. 16, if the evaluation values A, B, C, D, and E are set by permitting overlapping of the elemental behavior sections, only the evaluation section B becomes a low evaluation from among the five evaluation sections, it is possible to obtain a high evaluation in terms of the evaluation as a whole as compared to a case in which overlapping of the elemental behavior sections is not permitted.

In addition, in the embodiment described above, a case has been described as an example in which the first model is the HSMM and the second model is the HMM has been described; however, the example is not limited to this. As each of the models, another machine learning model, such as a model that uses a neural network, may be used.

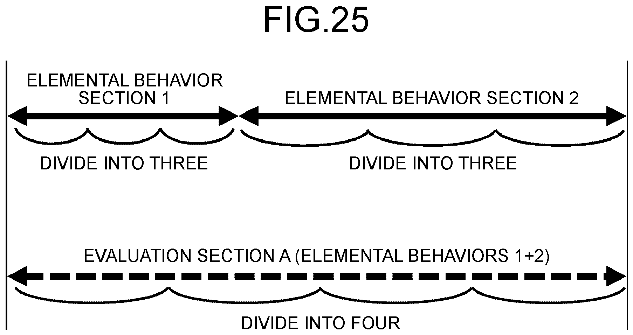

In addition, in the embodiment described above, it may be possible to temporarily divide the elemental behavior sections when machine learning is performed on the first model, and temporarily divide the evaluation sections when machine learning is performed on the second model. In this case, the transition probabilities of the motions in each of the divided sections are modeled, the entirety is modeled such that the states associated with the divided sections appear in a decisive order instead of a probabilistic order. At this time, as illustrated in FIG. 25, the number of divisions for dividing each of the elemental behavior sections and the evaluation sections is determined such that the divided sections are different between the elemental behavior sections and the evaluation sections. As a result, the first model and the second model are collection of models obtained by performing machine learning on sections that are different between these two models, so that it is possible to noticeably represent a difference between the first model and the second model.

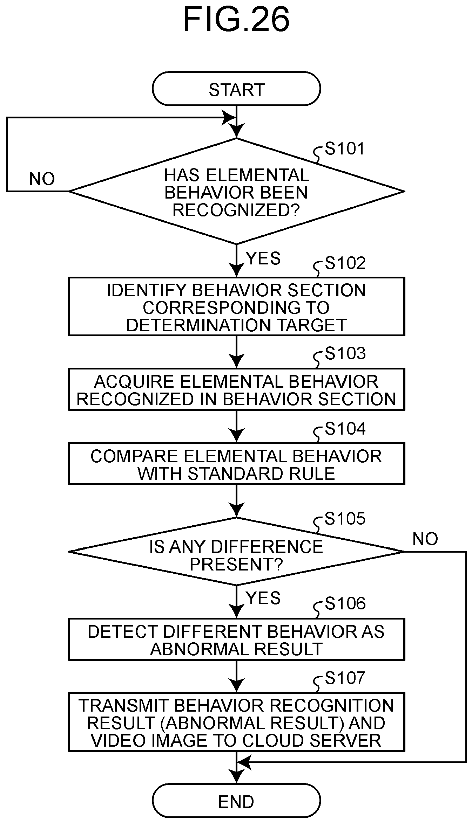

In the following, an abnormality detection process illustrated in FIG. 26 will be described. FIG. 26 is a flowchart illustrating the flow of the abnormality detection process.

As illustrated in FIG. 26, if recognition of the elemental behavior performed by the behavior section detection unit 10 has been completed (Yes at Step S101), the abnormality detection unit 50 identifies the behavior section targeted for determination (Step S102). Subsequently, the abnormality detection unit 50 acquires the elemental behavior that has been recognized in the behavior section (Step S103), and compares the recognized elemental behavior with the standard rule 43 (Step S104).

After that, if a difference is present (Yes at Step S105), the abnormality detection unit 50 detects a point of the different behavior as an abnormal result (Step S106), and transmits the abnormal result and the video image in which the abnormal result is included to the cloud server 100 (Step S107).

As described above, the behavior recognition device 1 detects an abnormal behavior by performing behavior recognition on the workers in the factory and notifies the cloud server 100 of the result, and the cloud server 100 provides a video image in which it is possible to identify the work state and the work content of the work performed by each of the workers to the user. Consequently, it is possible to perform upgrade of each of the behavior recognition device 1 and the Web application by different administrators, so that it is possible to increase an update frequency of the machine learning model and improve identification accuracy of the work performed by persons.

(b) Second Embodiment

In the above explanation, a description has been given of the embodiments according to the present invention; however, the present invention may also be implemented with various kinds of embodiments other than the embodiments described above.

Numerical value, etc.

The numerical example, the number of models, the elemental behaviors, the feature values, and the like used in the embodiment described above are only examples and may be arbitrarily changed. Furthermore, the flow of the processes described in each of the flowcharts may be changed as long as the processes do not conflict with each other.

System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. For example, it is possible to implement the behavior section detection unit 10 and the abnormality detection unit 50 by the same device.

Furthermore, all or any part of each of the processing functions performed by the each of the devices can be implemented by a CPU and by programs analyzed and executed by the CPU or implemented as hardware by wired logic.

Hardware of behavior recognition device 1

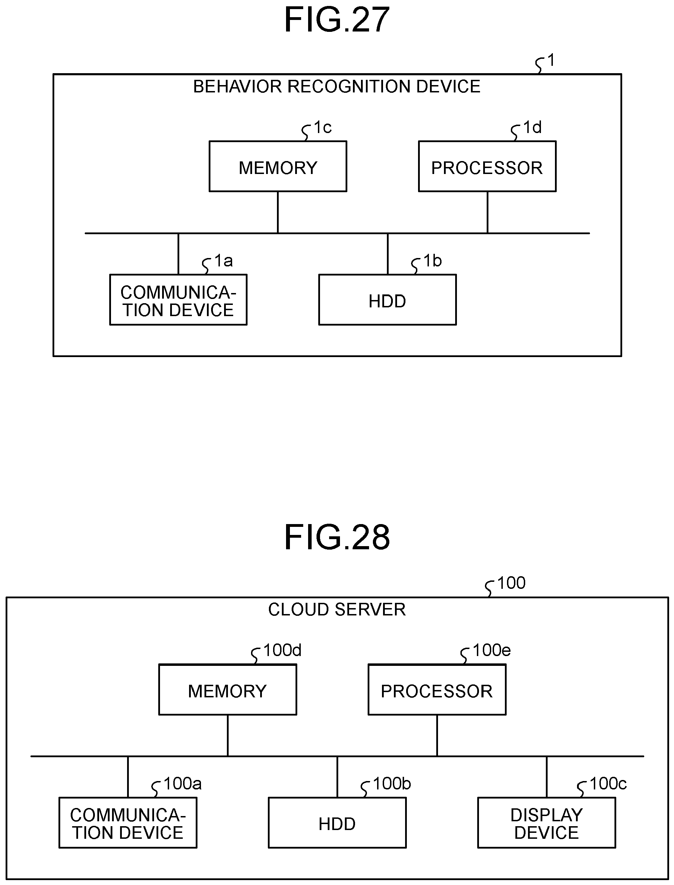

FIG. 27 is a diagram illustrating an example of a hardware configuration of the behavior recognition device 1. As illustrated in FIG. 27, the behavior recognition device 1 includes a communication device 1a, a Hard Disk Drive (HDD) 1b, a memory 1c, and a processor 1d. Furthermore, each of the units illustrated in FIG. 27 is connected by a bus or the like with each other. In addition, the behavior recognition device 1 may include a display, a touch panel, or the like other than the units described above.

The communication device 1a is a network interface card or the like, and communicates with other devices. The HDD 1b stores therein the programs and DBs that operate the functions illustrated in FIG. 3.

The processor 1d operates the process that executes each of the functions described above in FIG. 3 or the like by reading the programs that execute the same process as that performed by each of the processing units illustrated in FIG. 3 from the HDD 1b or the like and loading the read programs in the memory 1c. For example, the process executes the same functions as those performed by each of the processing units as those performed by each of the processing units included in the behavior recognition device 1. Specifically, the processor 1d reads, from the HDD 1b or the like, the programs having the same functions as those performed by the behavior section detection unit 10, the abnormality detection unit 50, and the like. Then, the processor 1d executes the process for executing the same processes as those performed by the behavior section detection unit 10, the abnormality detection unit 50, and the like.

In this way, the behavior recognition device 1 is operated as an information processing apparatus that performs a behavior recognition method by reading and executing the programs. Furthermore, the behavior recognition device 1 is also able to implement the same functions as those described above in the embodiment by reading the above described programs from a recording medium by a medium reading device and executing the read programs. In addition, the programs described in another embodiment are not limited to be executed by the behavior recognition device 1. For example, the above described embodiments may also be similarly used in a case in which another computer or a server executes a program or in a case in which another computer and a server cooperatively execute the program with each other.

The programs may be distributed via a network, such as the Internet. Furthermore, the programs may be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

Hardware of cloud server 100

FIG. 28 is a diagram illustrating an example of a hardware configuration of the cloud server 100. As illustrated in FIG. 28, the cloud server 100 includes a communication device 100a, an HDD 100b, a display device 100c, a memory 100d, and a processor 100e. Furthermore, each of the units illustrated in FIG. 28 is connected by a bus or the like with each other. In addition, the cloud server 100 may include a display, a touch panel, or the like other than the units described above.

The communication device 100a is a network interface card or the like, and communicates with other devices. The HDD 100b stores therein the programs and DBs that operate the functions illustrated in FIG. 3. The display device 100c displays and outputs various kinds of information, such as a Web page.

The processor 100e operates the process that executes each of the functions described above in FIG. 3 of the like by reading the programs that execute the same process as that performed by each of the processing units illustrated in FIG. 3 from the HDD 100b or the like and loading the read programs in the memory 100d. For example, the process executes the same functions as those performed by each of the processing units as those performed by each of the processing units included in the cloud server 100. Specifically, the processor 100e reads, from the HDD 100b or the like, the programs having the same functions as those performed by the reception unit 106, the display output unit 107, and the like. Then, the processor 100e executes the process for executing the same processes as those performed by the reception unit 106, the display output unit 107, and the like.

In this way, the cloud server 100 is operated as an information processing apparatus that performs a display method by reading and executing the programs. Furthermore, the cloud server 100 is also able to implement the same functions as those described above in the embodiment by reading the above described programs from a recording medium by a medium reading device and executing the read programs. In addition, the programs described in another embodiment are not limited to be executed by the cloud server 100. For example, the above described embodiments may also be similarly used in a case in which another computer or a server executes a program or in a case in which another computer and a server cooperatively execute the program with each other.

The programs may be distributed via a network, such as the Internet. Furthermore, the programs may be executed by storing the programs in a recording medium that can be read by a computer readable medium, such as a hard disk, a flexible disk, a CD-ROM, a magneto-optical disk (MO), a digital versatile disk (DVD), or the like, and read the programs from the recording medium by the computer.

According to an aspect of one embodiment, it is possible to improve identification accuracy of work performed by a person.

**Claims**

1. An abnormality transmission program that causes a computer (1) to execute a process comprising:

   acquiring (10) a video image in which a person is captured;
   determining (10), by analyzing the acquired video image, whether or not an elemental behavior performed by the person is abnormal for each section that is obtained by dividing the video image;
   when it is determined that the elemental behavior is abnormal, extracting (50), from the acquired video image, the video image included in the section in which the elemental behavior is determined to be abnormal; and
   transmitting (50), in an associated manner, the extracted video image included in the section and a category of the elemental behavior that is determined to be abnormal.

2. The n abnormality transmission program according to claim 1, wherein the determining includes determining, by inputting the acquired video image to a machine learning model, whether or not an elemental behavior performed by the person is abnormal for each section that is obtained by dividing the video image.

3. The abnormality transmission program according to claim 2, wherein
   the transmitting (50) includes

   establishing a session with a server device when it is determined that the elemental behavior is abnormal, and transmitting, by using the established session, the video image included in the section and the category of the elemental behavior that is determined to be abnormal to the server device.

4. The abnormality transmission program according to claim 3, wherein
   the transmitting (50) includes transmitting, when transmitting the video image included in the section and the category of the elemental behavior that is determined to be abnormal to the server device, an instruction to classify and display the video image included in the section based on the category of the elemental behavior designated by a user to the server device.

5. The abnormality transmission program according to claim 1, wherein
   the determining (10) includes

   comparing a standard rule in which a normal elemental behavior is associated for each section with each of the elemental behaviors that are identified to be performed by the person for each section that is obtained by dividing the video image, and
   determining that the section in which the elemental behavior that does not agree with the standard rule is included is the section in which the elemental behavior is determined to be abnormal.

6. The abnormality transmission program according to claim 5, wherein

   the standard rule is information in which a sequential order of the normal elemental behaviors to be performed for each section is defined, and
   the determining (10) includes

   comparing, for each section obtained by dividing the video image, the sequential order of the elemental behaviors defined in the standard rule with a sequential order of the elemental behaviors that are performed by an employee and that are identified from the video image, and
   determining that the section in which the sequential order of the elemental behaviors is different from the sequential order of the elemental behaviors defined in the standard rule is the section in which the elemental behavior is determined to be abnormal.

**7.** The abnormality transmission program according to claim 2, wherein

the machine learning model includes a first machine learning model and a second machine learning model, and the determining (10) includes

extracting time series feature values from the video image in which the behavior of the person is captured, estimating, by inputting the time series feature values associated with a candidate section that is a part of the section included in the video image to the first machine learning model, an elemental behavior section that indicates each of time sections associated with the elemental behaviors included in the candidate section,

acquiring, by inputting the time series feature values associated with an evaluation section that is formed of a combination of the elemental behavior sections to the second machine learning model, an evaluation result related to each of the evaluation sections, and

determining, based on each of the evaluation results related to the evaluation sections included in the candidate section, whether or not the candidate section is a behavior section that indicates a time section associated with a behavior that corresponds to a detection target.

**8.** The abnormality transmission program according to claim 7, wherein

the elemental behavior is a combination of motions of the person performed at the time at which the person performs each of manufacturing processes, and

the detection target is an abnormal behavior performed at the time at which the person manufactures a product.

**9.** The abnormality transmission program according to claim 2, wherein

the machine learning model includes a first machine learning model and a second machine learning model, and the determining (10) includes

extracting time series feature values from the video image in which the behavior of the person is captured, estimating, by inputting the time series feature values associated with a candidate section that is a part of the section included in the video image to the first machine learning model, an elemental behavior section that indicates each of time sections associated with the elemental behaviors included in the candidate section,

comparing the estimated elemental behavior section with a standard rule in which a normal elemental behavior is associated for each section that is stored in a storage, and

determining that the section in which the elemental behavior that does not agree with the standard rule is included is the section in which the elemental behavior is determined to be abnormal.

**10.** The abnormality transmission program according to claim 2, wherein

the machine learning model includes a first machine learning model and a second machine learning model, and the determining (10) includes

extracting time series feature values from the video image in which the behavior of the person is captured, estimating, by inputting the time series feature values associated with a candidate section that is a part of the section included in the video image to the first machine learning model, an elemental behavior section that indicates each of time sections associated with the elemental behaviors included in the candidate section,

acquiring, by inputting the time series feature values associated with an evaluation section that is formed of a combination of the elemental behavior sections to the second machine learning model, an evaluation result related to each of the evaluation sections,

determining, based on each of the evaluation results related to the evaluation sections included in the candidate section, whether or not the candidate section is a behavior section that indicates a time section associated with a behavior that corresponds to a detection target,

comparing the determined behavior section with a standard rule in which a normal elemental behavior is associated for each section that is stored in a storage, and

determining that the section in which the elemental behavior that does not agree with the standard rule is included is the section in which the elemental behavior is determined to be abnormal.

**11.** The abnormality transmission program according to claim 10, wherein

the determining (10) includes

estimating a goodness of fit between the time series feature values associated with the evaluation section and teacher information indicated by the second machine learning model in each of the evaluation sections regarding all types of the evaluation sections,
normalizing the goodness of fit corresponding to all types of the evaluation sections estimated regarding each of the evaluation sections,
selecting, from each of the evaluation sections, the normalized goodness of fit regarding the type associated with a combination of the elemental behavior sections associated with the elemental behaviors in accordance with an order of the behaviors each corresponding to the detection target, and
calculating an evaluation value obtained by integrating the normalized goodness of fit selected from each of the evaluation sections, and

the determining (10) whether or not the candidate section is the behavior section includes determining whether or not the calculated evaluation value is equal to or larger than a predetermined threshold.

**12.** The abnormality transmission program according to claim 2, wherein

the person is an employee who works in a factory, and
the category of the elemental behavior is a category of an abnormal behavior performed at the time at which the employee manufactures a product.

**13.** An abnormality transmission method that causes a computer (1) to execute a process comprising:

acquiring a video image in which a person is captured;
determining, by analyzing the acquired video image, whether or not an elemental behavior performed by the person is abnormal for each section that is obtained by dividing the video image;
when it is determined that the elemental behavior is abnormal, extracting, from the acquired video image, the video image included in the section in which the elemental behavior is determined to be abnormal; and
transmitting, in an associated manner, the extracted video image included in the section and a category of the elemental behavior that is determined to be abnormal.

**14.** An information processing apparatus (1) comprising:
a control unit (5) configured to execute a process including:

acquiring a video image in which a person is captured;
determining, by analyzing the acquired video image, whether or not an elemental behavior performed by the person is abnormal for each section that is obtained by dividing the video image;
when it is determined that the elemental behavior is abnormal, extracting, from the acquired video image, the video image included in the section in which the elemental behavior is determined to be abnormal; and
transmitting, in an associated manner, the extracted video image included in the section and a category of the elemental behavior that is determined to be abnormal.

**15.** The information processing apparatus (1) according to claim 14, wherein the process includes determining, by inputting the acquired video image to a machine learning model, whether or not an elemental behavior performed by the person is abnormal for each section that is obtained by dividing the video image.

**16.** The information processing apparatus (1) according to claim 15, wherein the process includes

establishing a session with a server device when it is determined that the elemental behavior is abnormal, and transmitting, by using the established session, the video image included in the section and the category of the elemental behavior that is determined to be abnormal to the server device.

**17.** The information processing apparatus (1) according to claim 16, wherein the process includes
transmitting, when transmitting the video image included in the section and the category of the elemental behavior that is determined to be abnormal to the server device, an instruction to classify and display the video image included in the section based on the category of the elemental behavior designated by a user to the server device.

# FIG.1

EP 4 332 909 A1

# FIG.2

CHECK OPERATION

0:00:00 ⚪ 0:06:02

DIVIDE SECTION

0:00:00 △ △ △ △ △ △ △ △ 0:06:02
1 2 3 4 5 ··· 23 24

| 1: FIT PART A IN |
| 2: FIT PART B IN |
| ... |
| 24: ATTACH COVER |

STANDARD RULE (REFERENCE MOTION)

| 1: FIT PART A IN |
| 2: SCREW PART A |
| ... |
| 24: ATTACH COVER |

DISAGREEMENT

RELEVANT VIDEO IMAGE + CATEGORY ⟹ TO CLOUD SERVER

EP 4 332 909 A1

# FIG.3

**BEHAVIOR RECOGNITION DEVICE** `1`

**CONTROL UNIT** `5`

**BEHAVIOR SECTION DETECTION UNIT** `10`

**ABNORMALITY DETECTION UNIT** `50`

**COMMUNICATION UNIT** `2`

**STORAGE AREA** `4`

**FIRST MODEL** `41`

**SECOND MODEL** `42`

**STANDARD RULE** `43`

`N`

**CLOUD SERVER** `100`

**COMMUNICATION UNIT** `101`

**CONTROL UNIT** `105`

**RECEPTION UNIT** `106`

**DISPLAY OUTPUT UNIT** `107`

**DISPLAY UNIT** `102`

**STORAGE AREA** `103`

**STANDARD RULE** `104`

EP 4 332 909 A1

# FIG.4

0:00:00       0:06:02

DIVIDE SECTION

0:00:00       0:06:02

1 2 3 4 5 ··· 23 24

1: FIT PART A IN

2: SCREW PART A

····

24: ATTACH COVER

EP 4 332 909 A1

# FIG.5

VIDEO IMAGE OBTAINED AT A TIME
(TEACHER INFORMATION)

MANUALLY DIVIDE SECTION OF ELEMENTAL BEHAVIOR

ANOTHER VIDEO IMAGE

AUTOMATICALLY DIVIDE SECTION OF ELEMENTAL BEHAVIOR

# FIG.6

VIDEO IMAGE INCLUDING
BEHAVIOR MULTIPLE TIMES

| BEHAVIOR 1 | BEHAVIOR 2 | BEHAVIOR 3 | TIME |

ELEMENTAL BEHAVIOR A  ELEMENTAL BEHAVIOR B  ...

# FIG.7

CANDIDATE SECTION

FEATURE VALUE

$x_1$   $x_2$   $x_3$   $x_4$   $x_5$   $x_6$   $x_7$   $x_8$   $x_9$   $x_{10}$

A    B    C

GOODNESS OF FIT A

GOODNESS OF FIT B

GOODNESS OF FIT C

FINAL EVALUATION VALUE

# FIG.8

EP 4 332 909 A1

ACTUAL TIME SECTION ASSOCIATED
WITH BEHAVIOR CORRESPONDING
TO DETECTION TARGET

TIME ZONE IN WHICH FEATURE VALUE IS
CLOSER TO TEACHER INFORMATION

TIME

CANDIDATE
SECTION

| ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6 |
|---|---|---|---|---|---|
| GOODNESS OF FIT HIGH | GOODNESS OF FIT HIGH | GOODNESS OF FIT HIGH | GOODNESS OF FIT LOW | GOODNESS OF FIT HIGH | GOODNESS OF FIT HIGH |

FINAL EVALUATION VALUE: HIGH

# FIG.9

ACTUAL TIME SECTION ASSOCIATED
WITH BEHAVIOR CORRESPONDING TO
DETECTION TARGET

TIME ZONE IN WHICH FEATURE VALUE IS
CLOSER TO TEACHER INFORMATION

TIME

CANDIDATE
SECTION

| ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6 |
|---|---|---|---|---|---|
| GOODNESS OF FIT HIGH | GOODNESS OF FIT LOW | GOODNESS OF FIT LOW | GOODNESS OF FIT HIGH | GOODNESS OF FIT HIGH | GOODNESS OF FIT LOW |

FINAL EVALUATION VALUE: LOW TO MEDIUM

EP 4 332 909 A1

# FIG.10

ACTUAL TIME SECTION ASSOCIATED
WITH BEHAVIOR CORRESPONDING TO
DETECTION TARGET

TIME ZONE IN WHICH FEATURE VALUE IS
CLOSER TO TEACHER INFORMATION

TIME

CANDIDATE
SECTION

**EARLY STAGE**
AGREE WITH TEACHER
INFORMATION TO SOME
EXTENT

**MIDDLE STAGE**
AGREE WITH TEACHER
INFORMATION TO SOME
EXTENT

**FINAL STAGE**
AGREE WITH TEACHER
INFORMATION TO SOME
EXTENT

EP 4 332 909 A1

# FIG.11

LEARNING PURPOSE VIDEO IMAGE

DETECTION PURPOSE VIDEO IMAGE

10

11 EXTRACTION UNIT

20 MACHINE LEARNING UNIT

21 OBSERVATION PROBABILITY LEARNING UNIT

22 TRANSITION PROBABILITY LEARNING UNIT

23 BUILDING UNIT

24 EVALUATION PURPOSE LEARNING UNIT

41 FIRST MODEL

42 SECOND MODEL

30 DETECTION UNIT

31 SETTING UNIT

32 ESTIMATION UNIT

33 EVALUATION UNIT

34 DETERMINATION UNIT

DETECTION RESULT

EP 4 332 909 A1

# FIG.12

# FIG.13

# FIG.14

BEHAVIOR SECTION INDICATED BY SUPERVISED DATA

TIME

| ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6 |

EVALUATION SECTION A
(ELEMENTAL BEHAVIORS 1+2)

EVALUATION SECTION C
(ELEMENTAL BEHAVIORS 3+4)

EVALUATION SECTION E
(ELEMENTAL BEHAVIORS 5+6)

EVALUATION SECTION B
(ELEMENTAL BEHAVIORS 2+3)

EVALUATION SECTION D
(ELEMENTAL BEHAVIORS 4+5)

EP 4 332 909 A1

# FIG.15

FEATURE VALUE $x_1$ $x_2$ $x_3$ $x_4$ $x_5$ $x_6$ $x_7$ $x_8$ $x_9$ $x_{10}$ $x_{11}$ $x_{12}$ $x_{13}$ $x_{14}$

CANDIDATE SECTION

| ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6 |

EVALUATION SECTION A (ELEMENTAL BEHAVIORS 1+2)
EVALUATION SECTION C (ELEMENTAL BEHAVIORS 3+4)
EVALUATION SECTION E (ELEMENTAL BEHAVIORS 5+6)

EVALUATION SECTION B (ELEMENTAL BEHAVIORS 2+3)
EVALUATION SECTION D (ELEMENTAL BEHAVIORS 4+5)

$P(x_1,x_2,x_3,x_4,x_5|A) \rightarrow \underline{0.85}$
$P(x_1,x_2,x_3,x_4,x_5|B) \rightarrow 0.13$
$P(x_1,x_2,x_3,x_4,x_5|C) \rightarrow 0.02$
$P(x_1,x_2,x_3,x_4,x_5|D) \rightarrow 0.00$
$P(x_1,x_2,x_3,x_4,x_5|E) \rightarrow 0.00$

$P(x_6,x_7,x_8,x_9|A) \rightarrow 0.01$
$P(x_6,x_7,x_8,x_9|B) \rightarrow 0.15$
$P(x_6,x_7,x_8,x_9|C) \rightarrow \underline{0.75}$
$P(x_6,x_7,x_8,x_9|D) \rightarrow 0.07$
$P(x_6,x_7,x_8,x_9|E) \rightarrow 0.02$

$P(x_{10},x_{11},x_{12},x_{13},x_{14}|A) \rightarrow 0.00$
$P(x_{10},x_{11},x_{12},x_{13},x_{14}|B) \rightarrow 0.00$
$P(x_{10},x_{11},x_{12},x_{13},x_{14}|C) \rightarrow 0.02$
$P(x_{10},x_{11},x_{12},x_{13},x_{14}|D) \rightarrow 0.12$
$P(x_{10},x_{11},x_{12},x_{13},x_{14}|E) \rightarrow \underline{0.86}$

$P(x_3,x_4,x_5,x_6,x_7|A) \rightarrow 0.10$
$P(x_3,x_4,x_5,x_6,x_7|B) \rightarrow \underline{0.80}$
$P(x_3,x_4,x_5,x_6,x_7|C) \rightarrow 0.07$
$P(x_3,x_4,x_5,x_6,x_7|D) \rightarrow 0.03$
$P(x_3,x_4,x_5,x_6,x_7|E) \rightarrow 0.00$

$P(x_8,x_9,x_{10},x_{11},x_{12}|A) \rightarrow 0.00$
$P(x_8,x_9,x_{10},x_{11},x_{12}|B) \rightarrow 0.03$
$P(x_8,x_9,x_{10},x_{11},x_{12}|C) \rightarrow 0.07$
$P(x_8,x_9,x_{10},x_{11},x_{12}|D) \rightarrow \underline{0.82}$
$P(x_8,x_9,x_{10},x_{11},x_{12}|E) \rightarrow 0.08$

FINAL EVALUATION VALUE (0.85+0.80+0.75+0.82+0.86)/5=0.816

EP 4 332 909 A1

# FIG.16

ACTUAL TIME SECTION ASSOCIATED
WITH BEHAVIOR CORRESPONDING TO
DETECTION TARGET

TIME ZONE IN WHICH FEATURE VALUE
IS CLOSER TO TEACHER DATA

TIME

CANDIDATE
SECTION

| ELEMENTAL<br>BEHAVIOR 1 | ELEMENTAL<br>BEHAVIOR 2 | ELEMENTAL<br>BEHAVIOR 3 | ELEMENTAL<br>BEHAVIOR 4 | ELEMENTAL<br>BEHAVIOR 5 | ELEMENTAL<br>BEHAVIOR 6 |

EVALUATION SECTION A
(ELEMENTAL BEHAVIORS 1+2)

EVALUATION SECTION C
(ELEMENTAL BEHAVIORS 3+4)

EVALUATION SECTION E
(ELEMENTAL BEHAVIORS 5+6)

RELATIVE GOODNESS OF FIT
HIGH

RELATIVE
GOODNESS OF FIT
HIGH

RELATIVE GOODNESS OF FIT
HIGH

EVALUATION SECTION B
(ELEMENTAL BEHAVIORS 2+3)

EVALUATION SECTION D
(ELEMENTAL BEHAVIORS 4+5)

RELATIVE GOODNESS OF FIT
LOW

RELATIVE GOODNESS OF FIT
HIGH

FINAL EVALUATION VALUE: HIGH

EP 4 332 909 A1

# FIG.17

| WORK SITE | CAMERA | WORK CONTENT | TIME ZONE | ELEMENTAL BEHAVIOR |
|---|---|---|---|---|
| WORK-PLACE A | CAMERA A1 | ASSEMBLE PRODUCT Z | 9:00-12:00 | ELEMENTAL BEHAVIOR 1→ELEMENTAL BEHAVIOR 2→ELEMENTAL BEHAVIOR 3 |
| | | PACK PRODUCT G | 13:00-17:00 | ELEMENTAL BEHAVIOR 5→ELEMENTAL BEHAVIOR 6→ELEMENTAL BEHAVIOR 4→ELEMENTAL BEHAVIOR 9 |
| WORK-PLACE B | ... | ... | ... | ... |
| ... | ... | ... | ... | ... |

EP 4 332 909 A1

# FIG.18

VIDEO IMAGE

↓ 41

FIRST MODEL

↓

OUTPUT RESULT

↓

(1) ABNORMALITY DETECTION (COMPARISON)

↑ 43

STANDARD RULE

FEATURE VALUE $x_1$ $x_2$ $x_3$ $x_4$ $x_5$ $x_6$ $x_7$ $x_8$ $x_9$ $x_{10}$ $x_{11}$ $x_{12}$ $x_{13}$ $x_{14}$

CANDIDATE SECTION

ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6

ELEMENTAL BEHAVIOR 1 → ELEMENTAL BEHAVIOR 3 → ELEMENTAL BEHAVIOR 2 → ELEMENTAL BEHAVIOR 4 → ELEMENTAL BEHAVIOR 5 → ELEMENTAL BEHAVIOR 6

(2) DETECT DIFFERENCE ⇨ (3) TRANSMIT TO CLOUD SERVER

·VIDEO IMAGE
·DETECTED BEHAVIORS
(ELEMENTAL BEHAVIOR 2, ELEMENTAL BEHAVIOR 3)
·CORRECT BEHAVIORS
(ELEMENTAL BEHAVIOR 3, ELEMENTAL BEHAVIOR 2)

EP 4 332 909 A1

# FIG.19

ACTUAL TIME SECTION ASSOCIATED WITH BEHAVIOR CORRESPONDING TO DETECTION TARGET

TIME ZONE IN WHICH FEATURE VALUE IS CLOSER TO TEACHER DATA

TIME

VIDEO IMAGE

FIRST MODEL — 41

SECOND MODEL — 42

DETERMINATION RESULT

CANDIDATE SECTION

| ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6 |

EVALUATION SECTION A (ELEMENTAL BEHAVIORS 1+2)
EVALUATION SECTION C (ELEMENTAL BEHAVIORS 3+4)
EVALUATION SECTION E (ELEMENTAL BEHAVIORS 5+6)

RELATIVE GOODNESS OF FIT HIGH
RELATIVE GOODNESS OF FIT HIGH
RELATIVE GOODNESS OF FIT HIGH

EVALUATION SECTION B (ELEMENTAL BEHAVIORS 2+3)
EVALUATION SECTION D (ELEMENTAL BEHAVIORS 4+5)

RELATIVE GOODNESS OF FIT LOW
RELATIVE GOODNESS OF FIT HIGH

FINAL EVALUATION VALUE: HIGH

(1) DETECT ABNORMALITY ⇨ (2) TRANSMIT TO CLOUD SERVER

·VIDEO IMAGE
·DETECTED BEHAVIORS
(ELEMENTAL BEHAVIOR 2, ELEMENTAL BEHAVIOR 3)
·RELATIVE GOODNESS OF FIT (LOW)

EP 4 332 909 A1

# FIG.20

VIDEO IMAGE

↓ 41

FIRST MODEL

↓ 42

SECOND MODEL

↓

DETERMINATION RESULT

↓

DECIDE BEHAVIOR SECTION

↓

IDENTIFY BEHAVIOR ASSOCIATED WITH EACH BEHAVIOR SECTION

ACTUAL TIME SECTION ASSOCIATED WITH BEHAVIOR CORRESPONDING TO DETECTION TARGET

TIME ZONE IN WHICH FEATURE VALUE IS CLOSER TO TEACHER DATA

TIME

CANDIDATE SECTION

| ELEMENTAL BEHAVIOR 1 | ELEMENTAL BEHAVIOR 2 | ELEMENTAL BEHAVIOR 3 | ELEMENTAL BEHAVIOR 4 | ELEMENTAL BEHAVIOR 5 | ELEMENTAL BEHAVIOR 6 |

EVALUATION SECTION A (ELEMENTAL BEHAVIORS 1+2)   EVALUATION SECTION C (ELEMENTAL BEHAVIORS 3+4)   EVALUATION SECTION E (ELEMENTAL BEHAVIORS 5+6)

RELATIVE GOODNESS OF FIT HIGH   RELATIVE GOODNESS OF FIT HIGH   RELATIVE GOODNESS OF FIT HIGH

EVALUATION SECTION B (ELEMENTAL BEHAVIORS 2+3)   EVALUATION SECTION D (ELEMENTAL BEHAVIORS 4+5)

RELATIVE GOODNESS OF FIT LOW   RELATIVE GOODNESS OF FIT HIGH

FINAL EVALUATION VALUE: HIGH

(2) TRUST ELEMENTAL BEHAVIOR

(1) REFER TO DETERMINATION RESULT

(3) IDENTIFY ELEMENTAL BEHAVIOR

⇩

(4) ABNORMALITY DETECTION (COMPARISON)

⇩

(5) DETECT DIFFERENCE

⇩

(6) TRANSMIT TO CLOUD SERVER

EP 4 332 909 A1

# FIG.21

EP 4 332 909 A1

WORK MANAGEMENT SERVICE — 110

DISPLAY VIDEO IMAGE AREA — 120

BEHAVIOR RECOGNITION RESULT AREA — 130

| BEHAVIOR | START | END |
|---|---|---|
| 1 SET PART B | 00:00 | 01:30 |
| 2 FIT PART B IN | 01:31 | 04:25 |
| ... | | ... |

131

00:10:10

121

| WORKPLACE SELECTION BUTTON | CAMERA SELECTION BUTTON |
|---|---|

140    150

# FIG.22

WORK MANAGEMENT SERVICE — 110

## DISPLAY VIDEO IMAGE AREA — 120

00:10:10

— 121

## BEHAVIOR RECOGNITION RESULT AREA — 130

— 131

| BEHAVIOR | START | END |
|---|---|---|
| 1 SET PART B | 00:00 | 01:30 |
| ⊗ 2 BOND PART B | 01:31 | 02:15 |
| ⊗ 3 SCREW PART B | 02:16 | 04:25 |
| ... | | ... |

— 132

NUMBER OF TIMES

| FIT IN | SCREW | BOND | ... |

| WORKPLACE SELECTION BUTTON — 140 | CAMERA SELECTION BUTTON — 150 |

# FIG.23

MACHINE LEARNING
PROCESS

EXTRACT TIME SERIES FEATURE VALUES
FROM LEARNING PURPOSE VIDEO IMAGE — S11

CALCULATE OBSERVATION PROBABILITY
FOR EACH MOTION BY CLUSTERING
FEATURE VALUES — S12

SORT FEATURE VALUES INTO EACH
ELEMENTAL BEHAVIOR SECTION
INDICATED BY TEACHER INFORMATION — S13

CALCULATE TRANSITION PROBABILITY
BETWEEN MOTIONS — S14

SET PROBABILITY DISTRIBUTION OF
DURATION TIME OF EACH ELEMENTAL
BEHAVIOR — S15

BUILD FIRST MODEL BASED ON
OBSERVATION PROBABILITY OF EACH
MOTION, TRANSITION PROBABILITY
BETWEEN MOTIONS, AND DURATION
TIME OF EACH ELEMENTAL BEHAVIOR — S16

SET EVALUATION SECTION — S17

SORT FEATURE VALUES INTO EACH
EVALUATION SECTION — S18

CALCULATE OBSERVATION PROBABILITY
FOR EACH EVALUATION SECTION — S19

END

# FIG.24

DETECTION PROCESS

EXTRACT FEATURE VALUES FROM DETECTION PURPOSE VIDEO IMAGE — S21

SET CANDIDATE SECTION — S22

ESTIMATE ELEMENTAL BEHAVIOR SECTIONS BASED ON FEATURE VALUES ASSOCIATED WITH CANDIDATE SECTION AND FIRST MODEL — S23

CALCULATE EVALUATION VALUE FOR EACH EVALUATION SECTION — S24

DETERMINE WHETHER OR NOT CANDIDATE SECTION IS BEHAVIOR SECTION BASED ON EVALUATION VALUE AND THRESHOLD — S25

DETECT SECTION DETERMINED TO BE BEHAVIOR SECTION FROM DETECTION PURPOSE VIDEO IMAGE AND OUTPUT SECTION AS DETECTION RESULT — S26

END

# FIG.25

ELEMENTAL BEHAVIOR
SECTION 1

ELEMENTAL BEHAVIOR SECTION 2

DIVIDE INTO THREE

DIVIDE INTO THREE

EVALUATION SECTION A (ELEMENTAL BEHAVIORS 1+2)

DIVIDE INTO FOUR

# FIG.26

```
        ┌──────────────────┐
        │      START        │
        └──────────────────┘
                 │
    ┌────────────▼──────────────┐  S101
    │        ╱             ╲     │
 NO │   HAS ELEMENTAL          │
◄───┤   BEHAVIOR BEEN          │
    │   RECOGNIZED?            │
    │        ╲             ╱     │
    └────────────┬──────────────┘
                 │ YES    S102
    ┌────────────▼──────────────┐
    │ IDENTIFY BEHAVIOR SECTION │
    │   CORRESPONDING TO        │
    │   DETERMINATION TARGET    │
    └────────────┬──────────────┘
                 │        S103
    ┌────────────▼──────────────┐
    │ ACQUIRE ELEMENTAL BEHAVIOR│
    │ RECOGNIZED IN BEHAVIOR SECTION│
    └────────────┬──────────────┘
                 │        S104
    ┌────────────▼──────────────┐
    │ COMPARE ELEMENTAL BEHAVIOR│
    │   WITH STANDARD RULE      │
    └────────────┬──────────────┘
                 │        S105
    ┌────────────▼──────────────┐  NO
    │   IS ANY DIFFERENCE       ├───►
    │      PRESENT?             │
    └────────────┬──────────────┘
                 │ YES    S106
    ┌────────────▼──────────────┐
    │ DETECT DIFFERENT BEHAVIOR AS│
    │   ABNORMAL RESULT         │
    └────────────┬──────────────┘
                 │        S107
    ┌────────────▼──────────────┐
    │ TRANSMIT BEHAVIOR RECOGNITION│
    │ RESULT (ABNORMAL RESULT) AND│
    │ VIDEO IMAGE TO CLOUD SERVER│
    └────────────┬──────────────┘
                 │
        ┌────────▼─────────┐
        │       END         │
        └──────────────────┘
```

START

S101
HAS ELEMENTAL BEHAVIOR BEEN RECOGNIZED?
NO
YES

S102
IDENTIFY BEHAVIOR SECTION CORRESPONDING TO DETERMINATION TARGET

S103
ACQUIRE ELEMENTAL BEHAVIOR RECOGNIZED IN BEHAVIOR SECTION

S104
COMPARE ELEMENTAL BEHAVIOR WITH STANDARD RULE

S105
IS ANY DIFFERENCE PRESENT?
NO
YES

S106
DETECT DIFFERENT BEHAVIOR AS ABNORMAL RESULT

S107
TRANSMIT BEHAVIOR RECOGNITION RESULT (ABNORMAL RESULT) AND VIDEO IMAGE TO CLOUD SERVER

END

# FIG.27

BEHAVIOR RECOGNITION DEVICE 1

MEMORY 1c

PROCESSOR 1d

COMMUNICA-TION DEVICE 1a

HDD 1b

# FIG.28

CLOUD SERVER 100

MEMORY 100d

PROCESSOR 100e

COMMUNICA-TION DEVICE 100a

HDD 100b

DISPLAY DEVICE 100c

Europäisches
Patentamt

European
Patent Office

Office européen
des brevets

# EUROPEAN SEARCH REPORT

**Application Number**

EP 23 17 5368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/248377 A1 (HUANG WEILIN [CN] ET AL) 12 August 2021 (2021-08-12) | 1-4,6-8, 10-17 | INV. G06V10/62 |
| Y | * paragraphs [0006], [0085], [0086], [0087], [0090], [0092] * | 5,6,9 | G06V10/82 G06V20/40 G06V20/52 |
| Y | US 2019/279468 A1 (KISHI REIKO [JP] ET AL) 12 September 2019 (2019-09-12) * paragraphs [0057] - [0067] * | 5,6,9 | G06V40/20 |
| A | EP 3 321 844 B1 (AXIS AB [SE]) 14 April 2021 (2021-04-14) * paragraphs [0056] - [0061] * | 1-17 | |

**TECHNICAL FIELDS SEARCHED (IPC)**

G06V

The present search report has been drawn up for all claims

| Place of search | Date of completion of the search | Examiner |
|---|---|---|
| The Hague | 11 December 2023 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 5368

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2023

| Patent document cited in search report | | Publication date | Patent family member(s) | | Publication date |
|---|---|---|---|---|---|
| US 2021248377 | A1 | 12-08-2021 | US | 10713493 B1 | 14-07-2020 |
| | | | US | 2021248377 A1 | 12-08-2021 |
| US 2019279468 | A1 | 12-09-2019 | JP | 6702045 B2 | 27-05-2020 |
| | | | JP | 2018010332 A | 18-01-2018 |
| | | | US | 2019279468 A1 | 12-09-2019 |
| | | | WO | 2018012148 A1 | 18-01-2018 |
| EP 3321844 | B1 | 14-04-2021 | CN | 108073890 A | 25-05-2018 |
| | | | EP | 3321844 A1 | 16-05-2018 |
| | | | JP | 6963467 B2 | 10-11-2021 |
| | | | JP | 2018125841 A | 09-08-2018 |
| | | | KR | 20180054453 A | 24-05-2018 |
| | | | TW | 201820264 A | 01-06-2018 |
| | | | US | 2018137362 A1 | 17-05-2018 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022082277 A